(19) Europäisches Patentamt

European Patent Office

Office européen des brevets

(11) **EP 1 615 438 A1**

(12) **EUROPEAN PATENT APPLICATION**
published in accordance with Art. 158(3) EPC

(43) Date of publication:
**11.01.2006 Bulletin 2006/02**

(51) Int Cl.:
*H04N 7/24* (1995.01)

(21) Application number: **04727707.4**

(22) Date of filing: **15.04.2004**

(86) International application number:
**PCT/JP2004/005394**

(87) International publication number:
**WO 2004/093458 (28.10.2004 Gazette 2004/44)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.04.2003 JP 2003110824**

(71) Applicant: **Kanazawa University Technology Licensing Organization Ltd.**
**Kanazawa shi,**
**Ishikawa 920-1192 (JP)**

(72) Inventors:
• **YOSHIMOTO, Masahiko**
**Kobe-shi,**
**Hyogo 651-1223 (JP)**

• **KAWAKAMI, Kentaro**
**Ishikawa-gun,**
**Ishikawa 920-2131 (JP)**
• **KANAMORI, Miwako**
**Imizu-gun,**
**Toyama 939-0274 (JP)**
• **OHIRA, Hideo**
**Fujisawa-shi,**
**Kanagawa 252-0804 (JP)**

(74) Representative: **Smith, Norman Ian et al**
**fJ CLEVELAND**
**40-43 Chancery Lane**
**London WC2A 1JQ (GB)**

(54) **MOVING PICTURE ENCODING OR DECODING PROCESSING SYSTEM AND MOVING PICTURE ENCODING OR DECODING PROCESSING METHOD**

(57)    This invention is aimed at providing a motion picture encoding or decoding system and a motion picture encoding or decoding method which economize the electric power consumption efficiently as compared with the conventional technique. They are provided with at least one failure avoiding means adapted to calculate a necessary volume Kp of operation required for encoding or decoding one frame, decide an operating frequency F capable of encoding or decoding the necessary volume Kp of operation within a duration T e allocated in advance to the operation of encoding or decoding the one frame, perform the operation of encoding or decoding the one frame while continuing the operation of the processor at the operating frequency F and an operating voltage V befitting the operating frequency F, and avoid the failure situation which occurs when the necessary volume Kp of operation is smaller than the actually necessary volume of operation.

Fig1

**Description**

Technical Field

This invention relates to a motion picture encoding or decoding system and a motion picture encoding or decoding method by using a processor capable of changing an operating frequency and an operating voltage.

Background Art

In recent years, it has become possible to transmit and receive motion pictures via a transmission line and store the motion pictures in a storage medium. Since the motion pictures are generally large volumes of information, the technique for encoding/decoding such motion pictures constitutes an indispensable requirement when the motion pictures are transmitted by using a transmission line having a limited transmission bit rate or when the motion pictures are stored in a storage medium having a limited storage capacity. As methods for encoding/decoding motion pictures, MPEG (Moving Picture Experts Group) and H.26X whose standardization has been advocated by ISO/IEC, are available at present. They are directed toward encoding or decoding a plurality of chronologically continuous frames constituting such motion pictures and are intended as techniques for decreasing volumes of information of motion pictures by effecting a cutback of the redundancy utilizing the temporal correlation and the spatial correlation of motion pictures, encoding the resultant motion pictures, and again decoding the encoded motion pictures to the former motion pictures.

These encoding/decoding techniques have been applied to such information terminals as personal computers and portable telephones using built-in microcomputers. Based on programs describing the procedures of encoding/decoding, these microprocessors function as a motion picture encoding system when the motion pictures are transmitted or as a motion picture decoding system when the motion pictures are received. Since the motion picture encoding or decoding process entails a comparatively large amount of computation power and consequently tends to consume large amount of electric power, the effort directed toward lowering the electric power consumption in the encoding and decoding process by using software having a greater flexibility than hardware has become a major task.

Now, the conventional means for lowering the electric power consumption in the motion picture encoding or decoding system resorting to use of software will be explained below. The conventional means for lowering the electric power consumption are disclosed, for example, in the following Non-Patent Document 1.

(Non-Patent Document 1) Glossary of Abstracts, pp 918-921 "An LSI for VDD-Hopping and MPEG4 System Based on the Chip" (H. Kawaguchi, G. Zhang, S. Lee, and T. Sakurai) of IEEE International Symposium on Circuits and System 2001 (May, 2001).

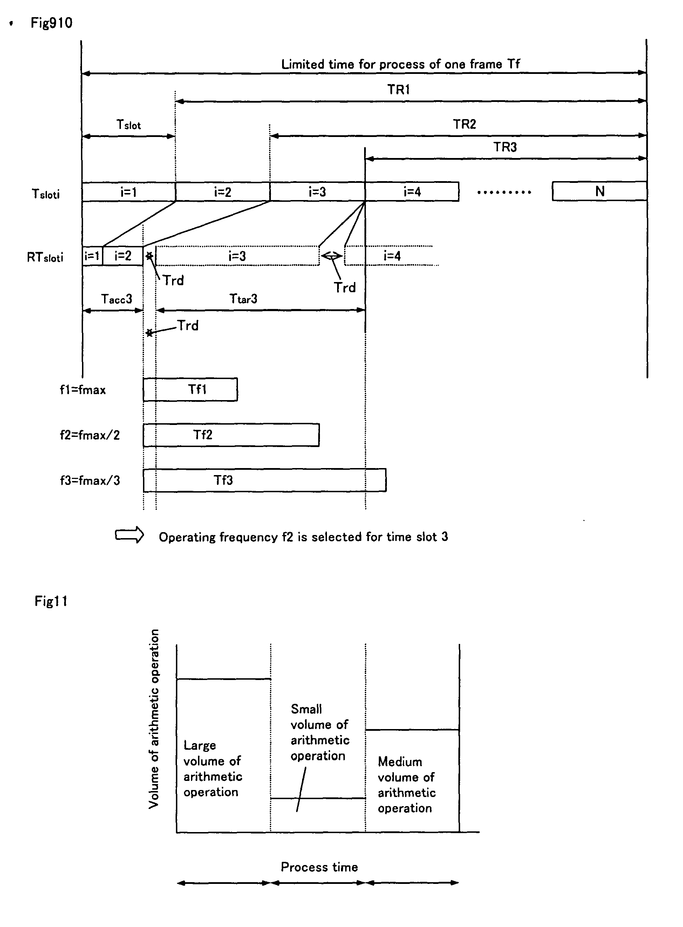

Fig. 10 is a diagram showing a conventional method for effecting reduction of electric power consumption with respect to the motion picture encoding system disclosed in Non-Patent Document 1. Incidentally, the means of lowering the electric power consumption applies similarly to the motion picture decoding system.

This example of the conventional method concerns a method for controlling the operating voltage and the operating frequency for implementing the decrease of the electric power consumption in encoding motion pictures (particularly MPEG) on the processor which is capable of dynamically changing the operating voltage and the operating frequency. To be specific, this example of the conventional method notices the fact that, during the operation of encoding motion pictures, the computation workload required for encoding or decoding motion pictures is varied every frame as by the activity and the intensity of motion within motion pictures as illustrated in Fig. 11 and attempts to attain the decrease of the electric power consumption by controlling the operating frequency and the operating voltage of the processor.

In the operation of encoding, the time for processing one frame is restricted as by the specification of the encoding method (such as MPEG) to the duration of $T_f$ and the operation of encoding one frame is required to be completed within this duration $T_f$. This duration $T_f$ (seconds) for processing one frame is divided into even N pieces. The individual pieces (time) are defined as a time slot $T_{slot}$ ($T_{slot} = T_f/N$) and the residual duration $T_{Ri}$ is defined as $T_{Ri} = T_f - T_{slot} * i$. The number of blocks of motion pictures to be processed in one time slot $T_{slot}$ (the motion pictures encoded by block units) is denoted by R ($R*N$, therefore, indicates the number of blocks in one frame) and the time which is spent in processing ($R*i$) blocks (namely the time spent in the actual processing of the group of blocks to be processed from the time slot $T_{slot}1$ through the time slot $T_{slot}i$ I) is denoted by $T_{acc}(i+1)$. The time required for stabilizing the operating voltage and the operating frequency after chaing the operating voltage is denoted by $T_{rd}$. The real time slot $R_{t slot i}$ denotes the processing time actually required for the processing to be completed within the time slot $T_{slot}i$. In Fig. 10, the processing of the group of blocks allocated to the time slot $T_{slot}1$ and the time slot $T_{slot}2$ is actuated by the clock frequency $f_{max}$ which enables the processing to be satisfactorily completed within the time slot $T_{slot}1$ and the time slot $T_{slot}2$ even when the workload for processing the blocks is maximal. When the time $T_{acc}3$ consumed for this processing satisfies this expression, $T_{acc}3 < (T_f - T_{r}2)$, namely when the processing of the group of allocated blocks is completed within the time slots $T_{slot}1$ and $T_{slot}2$, the processing time $T_{tar}3$ which is usable for processing the group of blocks allocated to the next time slot $T_{slot}3$ satisfies the expression, $T_{tar}3 = T_f - T_{acc}3$

- TR 3 - Trd. Since the processing of the group of blocks allocated to T slot 3 is only required to be completed within the processing time T tar 3, the operating frequency for the processing of this group of blocks is lowered. The processing times T f1, T f2, and T f3 shown in Fig. 10 denotes the durations of operation performed at the respective operating frequencies f 1, f 2, and f 3 when the workload is maximal at the time slot T slot 3. When the operating frequency f 2 = f max/2 shown in Fig. 10 is selected as the operating frequency, the processing even when the workload is maximal does not intrude into the next time slot T slot 4 in which the processing time ought to expire within the period extending from the time slot T slot 1 through the time slot T slot 3 is within (T f - TR 3). When the operating frequency f 3 = f max/3 is selected instead, the processing time T f 3 inevitably exceeds the processing time T tar 3. For the group of blocks to be processed in this time slot T slot 3, therefore, the operation is performed at the operating frequency of f 2 = f max/2 and the operating voltage befitting the operating frequency. In the same manner, this process is repeated for each of the subsequent time slots T slots.

When the operating clock frequency and the operating voltage are dynamically changed, therefore, the decrease of the electric power consumption is attained by selecting the smallest operating frequency in all the operating frequencies which are capable of processing the group of prescribed number of blocks within the prescribed duration, enabling the operation to be performed with the operating frequency and the operating voltage synthetically lowered, and controlling the voltage as occasion demands.

Incidentally, as regards the process (for example, the process in one frame) which ought to be completed within a stated processing time (such as, for example, the processing time T f for one frame here), the processor is preferably operated at fixed operating voltage and operating frequency throughout the entire processing time of the one frame. Specifically, on the assumption that the processing time for one frame is denoted by T f (second), the amount of operation by K f (cycle), and the operating frequency by F f, by setting the operating frequency at F f = K f/T f (cycles/second) and causing the processor to be operated at a fixed operating frequency F f throughout the entire length of the processing time Tf for one frame, it is made possible to attain the decrease of the electric power consumption as compared with the case of changing the operating frequency F f a number of times within the processing time T f.

In the present example of the conventional method, however, notwithstanding the unit of synchronizing the processing time T f is one frame, the decrease of the electric power consumption has not been fully attained because the operating voltage and the operating frequency have been changed to the maximum of N times within one frame. That is, the decrease of the electric power consumption in the process for encoding and decoding motion pictures with a processor which is capable of controlling the operating voltage and the operating frequency in many stages as in the present example of the conventional method has required the operating voltage and the operating frequency to be changed a number of times during the processing of one frame. Since the processing time is restrained by the unit of a frame as described above, the process proceeding in one frame is preferred to be controlled with a prescribed lowest possible frequency which enables the process to proceed

The present example of the conventional method in which the operating voltage and the operating frequency are changed in the maximum of N times during the process of one frame, therefore, the decrease of the electric power consumption has not been fully attained.

This invention is directed toward solving the task mentioned above and consequently providing a motion picture encoding or decoding system and a motion picture encoding or decoding program which enables the electric power consumption to be copiously decreased as compared with the conventional technique mentioned above.

Disclosure of the Invention

Specifically, the motion picture encoding or decoding system of this invention is characterized by being furnished with a processor for encoding or decoding motion pictures formed of a plurality of frames in the unit of frames and provided with at least one failure avoiding means to calculate a necessary volume Kp of operation required for encoding or decoding one frame, deciding an operating frequency F capable of encoding or decoding the necessary volume Kp of operation within a duration T e allocated in advance to the operation of encoding or decoding the one frame, performing the operation of encoding or decoding the one frame on a processor which operates at the operating frequency F and an operating voltage V befitting the operating frequency F, and avoiding the failure situation which occurs when the necessary volume Kp of operation is smaller than the actually necessary volume of operation. Then, the method of this invention for encoding or decoding motion pictures is characterized by being endowed with at least one failure avoiding step for calculating a necessary volume Kp of operation required for encoding or decoding one frame, deciding an operating frequency F capable of encoding or decoding the necessary volume Kp of operation within a duration T e allocated in advance to the operation of encoding or decoding the one frame, performing the operation of encoding or decoding the one frame on a processor which operates at the operating frequency F and an operating voltage V befitting the operating frequency F, and avoiding the failure situation which occurs when the necessary volume Kp of operation is smaller than the actually necessary volume of operation by the use of a processor for encoding or decoding motion pictures formed of a plurality of frames in the unit of frames.

In the specification of the encoding/decoding method (MPEG, for example), a processing time is allocated preparatorily to every frame. This invention calculates a necessary volume Kp of operation required for encoding or decoding one frame, decides an operating frequency F capable of encoding or decoding the necessary volume Kp of operation within a duration T e allocated in advance to the operation of encoding or decoding the one frame, and performs the operation of encoding or decoding the one frame on a processor which operates at the operating frequency F and an operating voltage V befitting the operating frequency F. As a result, it is made possible to perform the encoding or decoding operation while enabling the processor to be constantly operated at the lowest possible operating voltage and operating frequency necessary for encoding or decoding each frame and consequently promoting the decrease of the electric power consumption as compared with the conventional technique which requires the operating voltage and the operating frequency to be changed a number of times during the operation of encoding/decoding one frame because the operating frequency and the operating voltage are decided for each of the prescribed number of blocks formed by dividing the frame. Further, when the necessary volume Kp of operation is smaller than the actually necessary volume of operation, the failure situation which imparts a very bad quality to the images ensues because the encoding or decoding operation performed on the existing frame is not completed within the predetermined duration. This invention avoids the occurrence of the failure situation because it is furnished with at least one failure avoiding means capable of avoiding the failure situation.

The motion picture encoding or decoding system/method according to this invention, in implementing the operation of encoding motion pictures on the assumption that the frame in the plurality of sequential frames which is subjected to the encoding operation prior to the aforementioned one frame is designated as the preceding frame, is characterized by calculating the necessary volume Kp of operation by using at least one of the elements which comprise the amounts of motion of the aforementioned one frame and the preceding frame, the amount of activity of the aforementioned one frame, the amount of activity of the preceding frame, the average value of the quantized step size of the preceding frame, the difference between the average value of the quantized step size of the preceding frame and the average value of the quantized step size of the frame further preceding the preceding frame, the number of times of macro block matching of the preceding frame, the number of valid blocks of the preceding frame, the volume of operation actually required in encoding the preceding frame, the number of bits occurring in the preceding frame, the encoding bit rate of the aforementioned one frame, the frame encoding type selected between the intra frame encoding and the inter frame encoding to be performed on the aforementioned one frame, and the necessary volume of operation for the preceding frame.

The motion picture encoding or decoding system/method according to this invention, in implementing the operation of decoding motion pictures on the assumption that the frame in the plurality of sequential frames which is subjected to the decoding operation prior to the aforementioned one frame is designated as the preceding frame, is characterized by calculating the necessary volume Kp of operation by using at least one of the elements which comprise the number of bits of the encoding data of the aforementioned one frame, the frame encoding type selected between the intra frame encoding and the inter frame encoding which has been performed in the aforementioned one frame, the average value of the magnitude of motion vector of the aforementioned one frame or the preceding frame, the dispersion of the magnitude of the motion vector of the aforementioned one frame or the preceding frame, the number of valid blocks of the aforementioned one frame or the preceding frame, the number of valid coefficients of the aforementioned one frame or the preceding frame, the bit rate of the aforementioned one frame or the preceding frame, the amount of bit stream of the aforementioned one frame or the preceding frame, the average value of the quantized step size of the aforementioned one frame or the preceding frame, the difference of the average values of the quantized step size (the difference between the quantized step sizes of the aforementioned one frame and the frame further preceding the preceding frame or the difference between the quantized step size of the frame preceding by one frame and the quantized step size of the frame preceding by two frames), the necessary volume of operation actually required for decoding the preceding frame, and the necessary volume of operation for the preceding frame.

The plurality of elements enumerated above is factors which affect the volume of operation to be performed in the encoding or decoding operation. According to this invention, since the necessary volume Kp of operation is calculated by using at least one of the elements mentioned above, the necessary volume Kp of operation found by the calculation approximates closely to the volume of operation actually performed in the encoding or decoding operation. As a result, the incidence of the failure situation that the necessary volume Kp of operation is smaller than the actual volume of operation and the encoding or decoding operation is not completed within the specified duration can be decreased. Further, the possibility that the decrease of the electric power consumption will be inhibited because the calculated necessary volume Kp of operation is far larger than the actual volume of operation is diminished.

The motion picture encoding or decoding system/method according to this invention is characterized by being furnished, as the failure avoiding means/step mentioned above, with a first failure avoiding means/step capable of increasing the necessary volume Kp of operation.

According to this invention, since the failure avoiding means is capable of increasing the necessary volume of operation by a prescribed value, the possibility that the calculated necessary volume Kp of operation will meet the actual volume of operation is heightened and the failure situation can be avoided.

The first failure avoiding means/step mentioned above is characterized by multiplying the necessary volume Kp of operation by m (m denotes a real number of not less than 1) or adding a real number n larger than 0 to the necessary volume Kp of operation.

According to this invention, since the first failure avoiding means/step is capable of multiplying the necessary volume Kp of operation by m or adding n to the necessary volume Kp of operation, it is made possible by adjusting the value of m or n to allow the calculated necessary amount Kp of operation to exceed the actual volume of operation or approximate closely to the real volume of operation and consequently avoid the failure situation.

The motion picture encoding or decoding system/method according to this invention is characterized by being furnished, as the failure avoiding means/step mentioned above, with a second failure avoiding means/step which, when the operation of encoding the aforementioned one frame is not completed within the duration allocated in advance to the operation of encoding or decoding the aforementioned one frame, performs the operation of avoiding the failure situation.

In the first failure avoiding means/step mentioned above, the operation of avoiding the failure situation by increasing the necessary volume Kp of operation is implemented without reference to the presence or absence of the failure situation. According to this invention, since the second failure avoiding means/step performs the operation of avoiding the failure situation when the operation of encoding the aforementioned one frame is not completed within the duration allocated in advance to the operation of encoding or decoding the aforementioned one frame, the failure situation can be efficiently avoided because the operation of avoiding the failure situation is carried out only when failure situation occurs.

The second failure avoiding means/step mentioned above is characterized by interrupting the encoding operation at a prescribed timing and, on the occurrence of macro blocks which have not undergone the encoding operation, performing a forcedly not-coded block operation on the macro blocks. In the decoding operation, the forcedly not-coded block operation is not performed.

When the macro blocks which have not undergone the encoding operation occur, for example, in the prescribed timing which remains after subtracting the processing time for the processing all the macro blocks as forcedly not-coded blocks from the duration T e allocated in advance to the operation of encoding one frame, the possibility that the failure situation will occur is high because the calculated necessary volume of operation is smaller than the actually necessary volume of operation. According to this invention, the failure situation can be avoided because the second failure avoiding means/step interrupts the operation of encoding or decoding motion pictures at the aforementioned timing, for example, and, in the occurrence of a macro block which has not undergone the encoding operation, judges that the operation of encoding the aforementioned one frame will not be completed within the duration T e and the failure situation will consequently ensue, and performs the processing the relevant macro blocks as forcedly not-coded blocks.

The second failure avoiding means/step mentioned above is characterized by being provided with at least an operation residue judging means which interrupts the encoding or decoding operation at a prescribed timing and, when the residual portion of the necessary volume Kp of operation at the time of the interruption is smaller than the residual portion of the necessary volume of operation actually required for the encoding or decoding operation, increases the operating frequency and the operating voltage of the processor.

When the residual portion of the calculated necessary volume Kp of operation is smaller than the residual portion of the necessary volume of operation actually required for the encoding or decoding operation halfway along the course of the encoding or decoding operation, the possibility that the failure situation will occur is high because the calculated necessary volume Kp of operation mentioned above is smaller than the necessary volume of operation actually required for the encoding or decoding operation. Thus, the second failure avoiding means/step is relied on to interrupt the motion picture encoding or decoding operation at the prescribed timing and to compare the residual portions of necessary volume of operation mentioned above. When the residual portion of the necessary volume Kp of operation is judged by the comparison to be smaller than the residual portion of the necessary volume of operation actually required, the means/step mentioned above judges that the encoding or decoding operation will not be completed within the duration T e and the failure situation will consequently ensue and increases the operating frequency and the operating voltage of the processor. Since the speed of the operation by the processor is consequently heightened, it is made possible to increase the volume of operation available and avoid the failure situation. By pluralizing the number of interruption, it is made possible to increase the operating frequency and the operating voltage stepwise in conformity with the state of processing and add further to the possibility of avoiding the failure situation.

The processor mentioned above is characterized by having the r stages (r denotes an integer number of not less than 2) operating frequency available for the processing operation, calculating the operating frequency $F_e$ necessary for dealing with the necessary volume Kp of operation within the aforementioned duration T e in accordance with the formula $F_e = Kp/Te$, and deciding from the operating frequency available for the operation of the aforementioned processor the operating frequency F exceeding the necessary operating frequency $F_e$ mentioned above and approximating lost closely to the operating frequency $F_e$.

According to this invention, the operating frequency Fe necessary for dealing with the necessary volume Kp of operation within the duration Te is calculated by the formula $Fe = Kp/Te$, then the operating frequency F exceeding the necessary operating frequency $Fe$ mentioned above and approximating most closely to the operating frequency $Fe$ is decided from the operating frequency available for the operation of the processor, the operating voltage V befitting the decided operating frequency F is decided as well, and the processor is operated at the operating frequency F and the operating voltage V to effect the encoding or decoding operation. That is, since the processor is operated at the smallest operating frequency F and operating voltage V available for dealing with the necessary volume Kp of operation within the duration $Te$ in all the operating frequency and operating voltage available for the operation of the processor and the aforementioned operation of encoding or decoding the aforementioned one frame is processed on this processor, the decrease of the electric power consumption is efficiently accomplished even when the processor to be used happens to have the available operating frequency prepared stepwise.

Brief Description of the Drawing

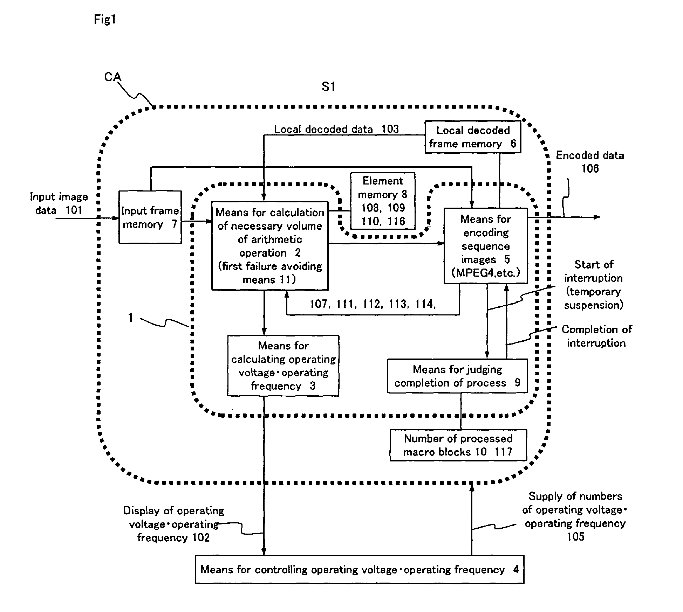

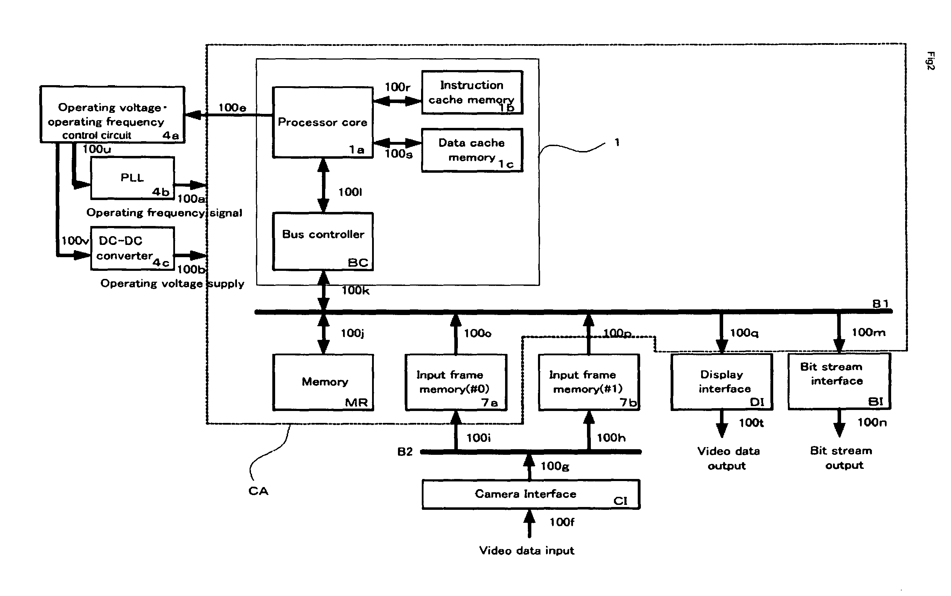

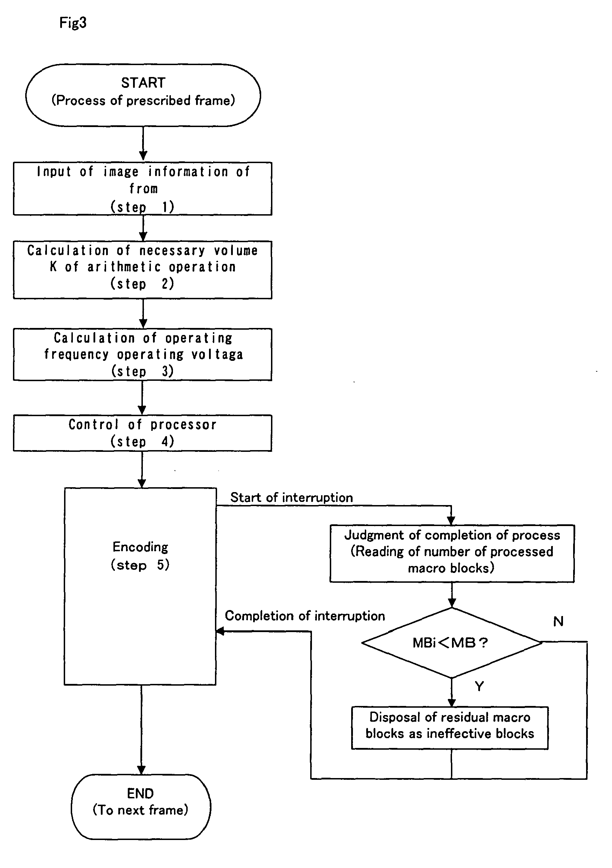

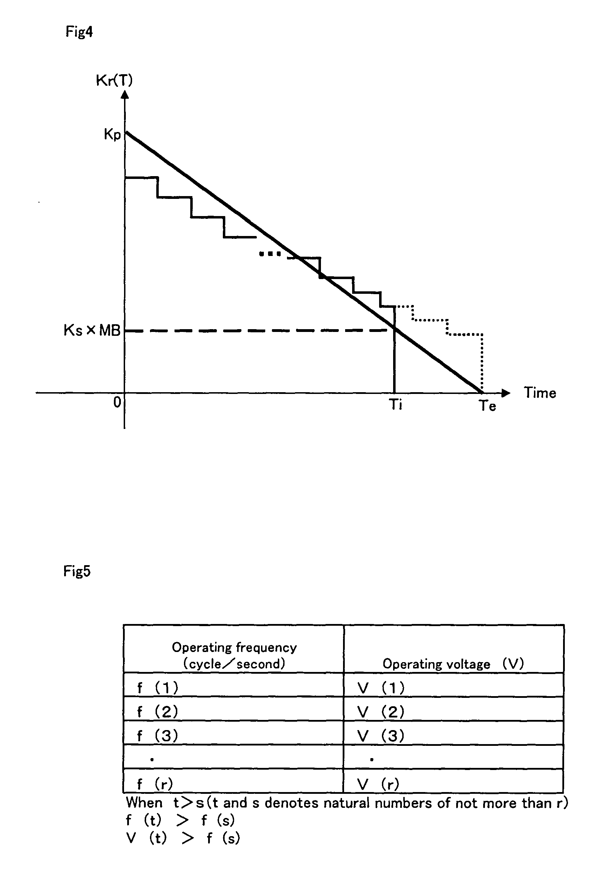

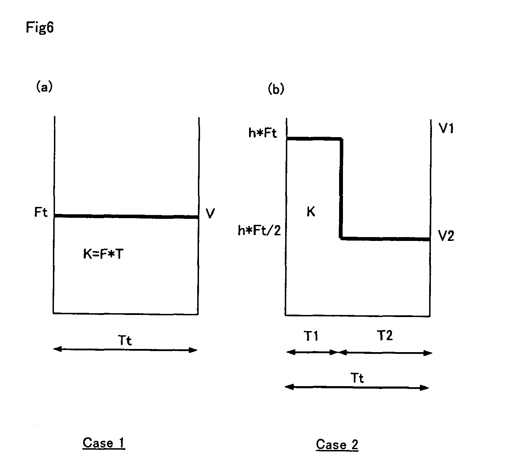

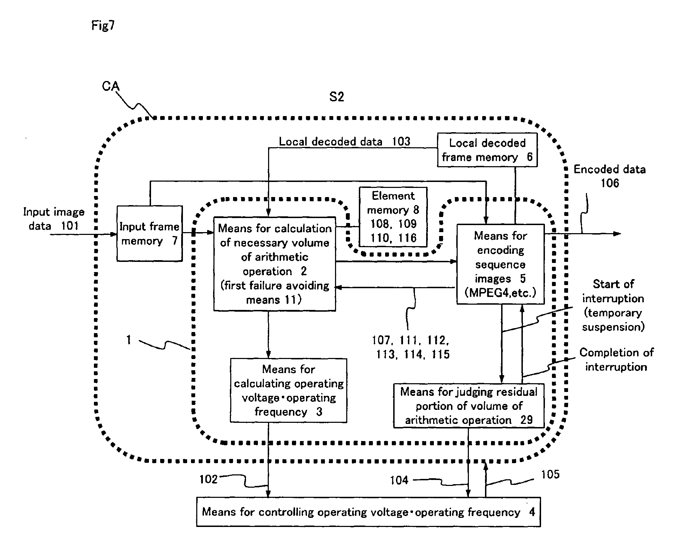

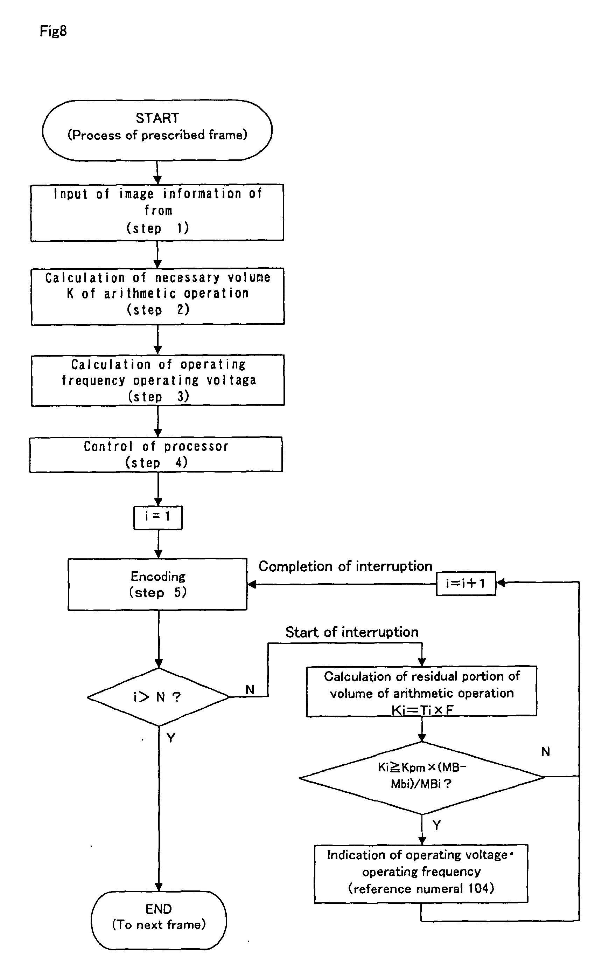

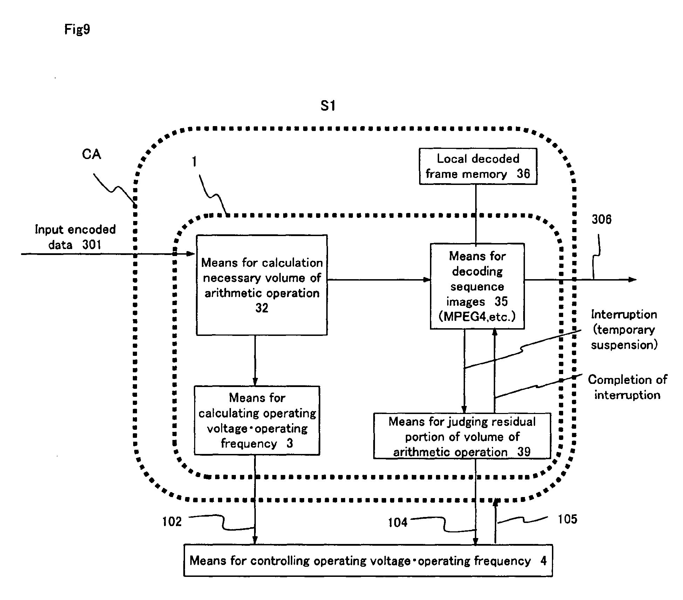

Fig. 1 is a schematic block diagram illustrating the performance of a motion picture encoding system in the first mode of embodiment of this invention. Fig. 2 is a diagram illustrating an example of implementing the motion picture encoding system of the mode of embodiment mentioned above. Fig. 3 is a diagram illustrating a motion picture encoding program for functionalizing a computer as a motion picture encoding system in the mode of embodiment mentioned above and a schematic flow chart of a motion picture encoding method realized by the program. Fig. 4 is a diagram showing the relation between the time for encoding operation and the residual portion of the operation in the motion picture encoding system in the mode of embodiment mentioned above. Fig. 5 is a conceptual diagram illustrating the operating voltage and operating frequency of a processor to be used in the motion picture encoding system in the mode of embodiment mentioned above. Fig. 6 is a diagram for aiding in the explanation of the availability of this invention. Fig. 7 is a schematic block diagram illustrating the performance of a motion picture encoding system in the second mode of embodiment of this invention. Fig. 8 is a schematic flow chart of a motion picture encoding program for functionalizing a computer as a motion picture encoding system in the mode of embodiment mentioned above. Fig. 9 is a schematic block diagram illustrating the performance of a motion picture decoding system in the third mode of embodiment of this invention. Fig. 10 is a diagram illustrating a conventional method for effecting a decrease in the electric power consumption with respect to the motion picture encoding system. Fig. 11 is a conceptual diagram illustrating the state in which the volume of operation for encoding or decoding motion pictures is varied by the unit of frames.

Best Mode of Embodying the Invention

Now, the motion picture encoding or decoding system and the method for operating the system according to this invention will be described as separated into the encoding operation and the decoding operation in detail below.

[First mode of embodiment]

The motion picture encoding system in the first mode of embodiment of this invention is realized by a computer which is an information terminal such as a portable telephone having a microprocessor built therein or a personal computer. Particularly, it is a system which is functioning in the computer as part of a multimedia signal processing part and it is a system for sequentially encoding motion pictures formed of a prescribed number of continuous frames in the unit of frames.

Fig. 1 is a schematic block diagram illustrating the performance of a motion picture encoding system S1 in the present mode of embodiment. The motion picture encoding system S1 is a computer (particularly a multimedia signal processing part in a computer) provided at least with a processor 1 having an operating voltage and an operating frequency prepared in r stages (r denotes an integer of not less than 2) (namely, enabled to operate with r stages of operating voltage and operating frequency) and enabled to vary the operating voltage and the operating frequency by a program, an operating voltage and operating frequency controlling means 4 furnished with a DC-DC converter, a PLL, etc. and adapted to control the operating voltage and the operating frequency of the processor 1, a local decoded frame memory 6 which is a memory region for storing prescribed data, an input frame memory 7, an element memory 8, and a processed macro block number register 10. Only, the local decoding memory 6 and the input frame memory 7 may have the operating voltage and operating frequency thereof controlled by the operating voltage and operating frequency controlling means 4 in the same manner as the processor 1. In the present mode of embodiment, the components contained in a controlling region CA indicated with a dotted line (the processor 1, the local decoded frame memory 6, the element memory 8, the processed macro block number register 10, input frame memories 7a and 7b, etc.) have the operating frequency and the operating voltage thereof controlled.

The processor 1 is provided, as means operating on the processor 1, with a means 2 to calculate the necessary volume of operation, an operating voltage and operating frequency calculating means 3, a motion picture encoding means 5, and two failure avoiding means 9 and 11. The two failure avoiding means 9 and 11 are means to avoid the failure situation which occurs when the necessary volume of operation calculated by the means 2 for calculating the necessary volume of operation is smaller than the volume of operation actually necessary for the encoding operation performed by the encoding means 5. Specifically, they are the first failure avoiding means 11 functioning as part of the means 5 for calculating the necessary volume of operation and the means 9 for judging completion of the operation as the second failure avoiding means. Incidentally, the reference numeral 101 denotes an input image data, the reference numeral 102 denotes an indicator of operating voltage and operating frequency, the reference numeral 103 denotes a local decoding data of the preceding frame, the reference numeral 105 denotes an operating voltage and operating frequency supply, the reference numeral 106 denotes a frame encoding data, the reference numeral 107 denotes an information of the average value of the quantized step size of the preceding frame, the reference numeral 108 denotes the frame encoding type of each frame to be selected between the intra frame encoding and the inter frame encoding, the reference numeral 109 denotes the information of the encoding bit rate of motion pictures, the reference numeral 110 denotes the amount of activity of the preceding frame, the reference numeral 111 denotes the number of times of macro block matching of the preceding frame, the reference numeral 112 denotes the number of valid blocks of the preceding frame, the reference numeral 113 denotes the number of valid coefficients of the preceding frame, the reference numeral 114 denotes the difference between the average value of the quantized step size of the preceding frame and the average value of the quantized step size of the frame preceding the preceding frame by one frame, the reference numeral 115 denotes the volume of operation actually required for encoding the preceding frame, the reference numeral 116 denotes the necessary volume of operation of the preceding frame calculated by the means 2 for calculating the necessary volume of operation, and the reference numeral 117 denotes the number of processed macro blocks which is the number of macro blocks having completed the encoding operation. The element memory 8 is a memory region for storing part of the plurality of elements to be used in the means 2 for calculating the necessary volume of operation as specifically described herein below (the frame encoding type 108 of each frame selected between the intra frame encoding and the inter frame encoding, the encoding bit rate 109, the amount 110 of activity of the frame, and the necessary volume 116 of operation calculated by the means 2 for calculating the necessary volume of operation). The processed macro block number register 10 is a register for storing temporarily the information of the number 117 of macro blocks which have undergone the encoding operation. The motion picture encoding means 5 uses MPEG-4 for the method of encoding. It may optionally use other method of encoding such as, for example, H.26X, MPEG-1, or MPEG-2.

Fig. 2 illustrates an example of implementing the motion picture encoding system S1. The system S1 is realized by hardware which is furnished mainly with the processor 1, such peripheral units as various memories MR, 7a, and 7b, and various interfaces C1, D1, and B1, and an operating voltage and operating frequency controlling circuit 4a The various component elements enumerated above are rendered mutually communicable through the medium of buses B1 and B2.

The processor 1 is provided with a processor core 1a, an instruction cache memory 1b, and a data cache memory 1c. The means 2 for calculating a necessary volume of operation, the means 3 for deciding the operating voltage and operating frequency, the means 5 for encoding motion pictures, and the means 9 and 11 for avoiding failure are realized by the optional execution on the processor core 1a of the programs stored in the memory MR. The instruction cache memory 1b and the data cache memory 1c are such cache memories which are provided for the purpose of expediting the operation of the programs on the processor core 1a.

The local decoded frame memory 6, the element memory 8, and the processed macro block number register 10 are collectively stored in the memory MR shown in Fig. 2. Meanwhile, the average value 107 of the quantized step size of the preceding frame, the frame encoding type 108 of each frame selected between the intra frame encoding and the inter frame encoding, the motion picture encoding bit rate 109, the amount 110 of activity of the preceding frame (the past frame), the number 111 of times of macro block matching of the preceding frame, the number 112 of valid blocks of the preceding frame, the number 113 of valid coefficients of the preceding frame, the value 114 of the difference between the average value of the quantized step size of the preceding frame and the average value of the quantized step size of the frame preceding the preceding frame by one frame, the amount 115 of operation actually required for encoding the preceding frame, the necessary volume 116 of operation of the preceding frame calculated by the means for calculating the necessary volume of operation, and the processed macro block number 117 are stored as data in a memory If. The local decoded data 103 are transmitted and received as signals 100j, 100k, and 1001 through the medium of a bus controller BC between the memory MR and the processor core 1a.

The two input frame memories 7a and 7b correspond to the frame memory 7 shown in Fig. 1. The video data (input image data 101) input from a camera interface Cl are input through the medium of a bus B2 into the input frame memory 7a (or the input frame memory 7b). The input frame memory (#0) 7a and the input frame memory (#1) 7b exchange their services whenever one frame has been processed. That is, when the process in the i-th frame causes the input image data to be written by the signal 100h in the input frame memory (#1) 7b and the input image data to be read out by the signal 100o from the input frame memory (#0) 7a for the sake of the operation of encoding by the motion picture encoding means, the process in the (i + 1)th frame causes the input image data to be written by the signal 100 i into the input frame memory (#0) 7a and the input image data to be read out by the signal 100p from the input frame memory (#1) 7b for the sake of the operation of encoding by the motion picture encoding means. Thus, the signal 100p does not occur when the input image data is being written by the signal 100h into the input frame memory (#1) 7b and the signal 100h does not occur conversely when the image is being read out by the signal 100p. Likewise, the signal 100o does not occur when the input image data is being written by the signal 100i into the input frame memory (#0) 7a and the signal 100i does not occur when the input image data is being read out by the signal 100o from the input frame memory (#0) 7a. In this case, the input frame memory (#0) 7a in the process of the i-th frame and the input frame memory (#1) 7b in the process of the (i + 1)th frame respectively constitute the subject for control of the operating frequency and the operating voltage. By having the input frame memory prepared one each for two frames and enabling the respective operating frequencies to be set independently as described above, it is made possible to execute the action of writing the input image data from the camera interface CI which constantly uses a fixed operating frequency and the action of reading the input image data having the operating frequency varied based on the calculated value of the necessary volume of operation without being mutually interrupted.

The operating voltage and operating frequency controlling circuit 4a is enabled to effect mutual transmission and reception of a signal with PLL 4b and DC-DC converter 4c and these components collectively function as the operating voltage and operating frequency controlling means 4. The operating voltage and operating frequency controlling means 4 receives the operating voltage and operating frequency designation 102 in response to the signal 100e from the processor core 1a and transmits the signal 100u to the PLL 4b and the signal 100v to the DC-DC converter 4c based on the designation 102. The PLL 4b transmits the operating frequency signal 100a based on the signal 100u and the DC-DC converter 4c supplies the operating voltage 100b based on the signal 100v. As a result, the operating frequency and the operating voltage are controlled on the part of the components included in the control region CA indicated by a dotted line in Fig. 2 (processor 1, memory MR, input frame memories 7a and 7b, bus controller BC, etc.). The signals 100e, 100j, 100k, 1001, 100m, 100o, 100p, 100q, 100r, and 100s have the frequencies and the signal levels thereof varied in conformity with the operating frequency signal 100a emitted by the PLL 4b and the value of the supply voltage 100b emitted by the DC-DC converter 4c.

The encoded data which results from the encoding by the motion picture encoding means 5 operating on the processor 1 is transmitted as the signal 100m via the bus B1 to a bit stream interface BI and output as the signal 100n and transmitted to the memory MR functioning as the local decoded frame memory 6. Then, the data of images is read out as the signal 100q from the memory via the bus B1 and transmitted to a display interface DI. The signal 100q which has been received by the display interface DI is fed out as the video data by the signal 100t. The video data is output and displayed as motion pictures through the medium of a monitor connected to the display interface DI.

The operating voltage and operating frequency controlling circuit 4a, the display interface DI, and the bit stream interface BI are constantly operated with fixed operating voltages. The signals 100e, 100q, and 100m which are transmitted and received between these components have the signal levels thereof varied in conformity with the changes of operating voltage of the components (processor 1, memory MR, input frame memories 7a and 7b, etc.) contained in the controlling region CA. For the purpose of absorbing this influence, the operating voltage and operating frequency controlling circuit 4a, the display interface DI, and the bit stream interface BI are preferred to be provided with a level converter which corrects the signal levels of the received signals 100e, 100q, and 100m.

Now, the performance of the motion picture encoding system S1 in the present mode of embodiment will be explained below with reference to Fig. 1. The motion picture encoding system S 1 is realized by causing a computer (particularly the multimedia signal processing part in a computer) to function as the following prescribed means by the motion picture encoding program Prg 1. On the assumption that one arbitrary frame now on the verge of being encoded in all the frames to be sequentially encoded (that is, the frame which will be encoded next based on the point at which a certain frame is encoded, i.e. the frame which has not yet been encoded by that point and is expected to be encoded in the future) is designated as the present frame and one frame which has been encoded before the present frame (the frame which was encoded in the past) as the former frame, the process of encoding the present frame will be explained below. The same process is carried out on any of the frames.

Fig. 3 is a diagram showing a schematic flow chart of the motion picture encoding program Prg 1. At step 1 to step 5 which will be specifically described herein below, the computer is functioned as the following individual means: (Step 1) for inputting the image data in the present frame into the input frame memory 7. (Step 2) for causing the computer to function as the necessary operation volume calculating means 2 for calculating the necessary volume Kp of operation for the present frame. (Step 3) for causing the computer to function as the operating voltage and operating frequency calculating means 3 for calculating the operating frequency F and the operating voltage V of the processor according to the calculated necessary volume Kp of operation. (Step 4) for causing the computer to function as the operation voltage and operating frequency controlling means 4 for controlling the operation of the processor 1 at the calculated operating frequency F and operating voltage V. (Step 5) for causing the computer to function as the motion picture encoding means 5 for encoding the image information of the present frame. The motion pictures are encoded by causing the process from the step 1 through the step 5 mentioned above to be performed on all the relevant frames sequentially in the order the frames are input in the input frame memory 7 (namely in the order in which the frames are encoded). The process of encoding will be explained in detail below.

(Step 1) The input image data which has been fed in is temporarily stored, for the purpose of synchronizing frames, in the input frame memory 7 which is the memory region for temporarily storing frames.

(Step 2) The means 2 for calculating the necessary volume of operation gains access to the input frame memory 7, acquires the input image data 101 of the present frame, and calculates the necessary volume Kp of operation required for the operation of encoding the present frame. While various methods are conceivable for the calculation of the necessary volume Kp of operation, it is preferable to implement the calculation, for example, by using not less than one element which affects the volume of operation to be used in the operation of encoding the present frame. When the operation of encoding motion pictures is directed toward the compensation of motion and is consequently required to pay due attention to the fact that images of violent motion need a large volume of operation and images of moderate motion need a small volume of operation, the concrete examples of the element mentioned above include the value of strain calculated as the amount of movement of the present frame and the former frame by the sum of absolute difference value, the value calculated as the amount of activity of the individual frames by the sum of absolute difference values of adjacent picture elements, the number of times of macro block matching, the number of valid blocks, the number of valid coefficients, the encoding bit rate, the number of generated bits, the volume of operation actually required for encoding the former frame, and the necessary volume of operation of the former frame calculated by the means 2 for calculating the necessary volume of operation. Here, on the assumption that these elements are such that the value of only one element varies and the values of the other elements do not vary, the necessary volume of operation relatively increases when the value of that one element is large than when it is small and the necessary volume of operation decreases when the value of that one element is small than when it is large. Further, the necessary volume Kp of operation relatively decreases when the present frame undergoes intra frame encoding than when it undergoes inter frame encoding and the necessary volume Kp of operation relatively increases when the present undergoes inter frame encoding than when it undergoes intra frame encoding. That is, since the plurality of elements affect the necessary volume of operation required for the encoding the present frame, the necessary volume Kp of operation calculated by the means 2 for calculating the necessary volume of operation approaches closely to the volume of operation obtained by actually performing the operation of encoding when the means 2 for calculating the necessary volume of operation is caused to perform the calculation so as to increase or decrease the necessary volume Kp (cycle) of operation in compliance with these elements.

For example, the present mode of embodiment performs the calculation by using the function G and forecasts (calculates) the size of movement of the input image by comparing the input image data 101 of the present frame stored in the input frame memory 7 with the local decoded data 103 of the decoded former frame accumulated in the local decoded frame memory 6. The local decoded data 103 of the former frame is formed by the local decoder during the operation of encoding the former frame which is encoded prior to the present frame and is stored in the local decoded frame memory 6. Now, the method for determining the sum of absolute difference value $\Sigma$ and the necessary volume Kp of operation will be explained below. Incidentally, as the image data of the former frame, the local decoding data 103 decoded by the local decoder after the encoding may be used or the input image data of the former frame which has been input may be used as it is.

On the assumption that the input image data 101 of the present frame accumulated in the input frame memory 7 is denoted by $X(i, j)$ (wherein i denotes the coordinates of the image in the horizontal direction and j denotes the coordinates of the image in the vertical direction) and the local decoded data 103 of the former frame accumulated in the local decoded frame memory 6 which will be specifically described herein after is denoted by $Y(i, j)$ (wherein i denotes the coordinates of the image in the horizontal direction and j denotes the coordinates of the image in the vertical direction), the amounts of motion of the present frame and the former frame will be determined by performing the calculation of the sum of absolute difference value $Z = \Sigma| X(i, j) - Y(i, j) |$ on all (or sampled) picture images. The value of this sum of absolute difference is denoted by Z. Meanwhile, the amount of activity of the frame is determined by calculating the sum of absolute difference value of adjacent picture element W in $X(i, j)$, namely Wh in the horizontal direction $= \Sigma| X(i, j) - X(i-1, j)|$ and Wv in the vertical direction $= \Sigma| X(i, j) - X(i, j-1)$. This calculation is performed on all (or sampled) input images. The sum of absolute difference value of adjacent picture element (namely the amounts of activity of the individual frames) is denoted by W.

Let Z stand for the sum of absolute difference value, Wa for the amount of activity of the present frame, Wb for the amount of activity of the former frame (the past frame), Qprev for the average quantized step size of the former frame (the average value of quantized step sizes), M for the number of times of macro block matching of the former frame, B for the number of valid blocks of the former frame, C for the number of valid coefficients of the former frame, S for the amount of processing actually required for encoding the former frame, BR for the encoding bit rate of the present frame, $\Delta$Qprev for the difference between the average value of the quantized step size of the former frame and the average value of the quantized step size of the frame preceding the former frame by one frame, D for the number of bits actually occurring in the encoding former frame, and Kp' for the calculated necessary volume of operation of the former frame, then the necessary volume Kp of operation will be calculated by using not less than one of all these elements as follows.

$$Kp = G\ (Z,\ Wa,\ Wb,\ Qprev,\ M,\ B,\ C,\ S,\ BR,\ \Delta Qprev,\ D,\ Kp')\ \dots\ (\text{Mathematical 1})$$

wherein G denotes the function derived from at least one of the elements Z, Wa, Wb, Qprev, M, B, C, S, BR, $\Delta$Qpev, D, and Kp'. As one example, the following formula

$$Kp = j + \alpha M + \beta B + \gamma C + \delta Z + \varepsilon \Delta Qprev\ \dots\ (\text{Mathematical 2})$$

may be cited, though not exclusively. Then, as the element to be used for the calculation of the necessary volume Kp of operation, the frame encoding mode I of the present frame selected between the intra frame encoding and the inter frame encoding is used. The necessary volume Kp of operation assumes a small value when the present frame undergoes the intra frame encoding and a large value when the frame undergoes the inter frame encoding. That is, the means 2 for calculating the necessary volume of operation, when using the sum of absolute difference value Z, calculates the sum of absolute difference differential value Z $=\sum|$ Xij - Yij $|$ and subsequently calculates the necessary volume of operation Kp = G (Z, Wa, Wb, Qprev, M, B, C, S, BR, $\Delta$Qpev, D, Kp').

Now, the function G mentioned above will be explained below. When the change of images between the former frame and the present frame is large (small), namely when the sum of absolute difference value Z is large (or small), the number of times of macro block matching executed in the present frame increases (decreases) and the volume of operation necessary for the operation of detecting the movement of the present frame (which depends on the number of times of macro block matching to be executed) is increased (decreased). When the amount Wa of activity of the present frame is large (small), this fact means that the present frame contains the high frequency component of images in a large (small) amount. In this case, the number of valid blocks and the number of valid coefficients which occur in the operation of encoding the present frame are increased (decreased) and the volume of operation required for the operation of subjecting the present frame to IDCT (which depends on the number of valid blocks to be generated), the volume of operation necessary for the IQ process (which depends on the number of valid coefficients to be formed), and the volume of operation necessary for the VLC process (which depends on the number of valid coefficients to be formed) are increased (decreased). Thus, the function G mentioned above is so configured that the Kp may be set at a large (small) magnitude when such parameters as Z and Wa are large (small).

Since the motion pictures have large correlations between the continuing frames, the number of times of macro block matching executed in the encoding operation, the number of valid blocks generated in the encoding operation, the number of valid coefficients generated in the encoding operation, the volume of operation required for the encoding operation, and the amount of activity severally assume very close magnitudes between the frames continuing along the course of time. When M, B, C, S, and Wb are large (small), therefore, the probability that the number of times of macro block matching, the number of valid blocks, the number of valid coefficient, the volume of operation required for the encoding operation, and the amount of activity will increase (decrease) in the present frame as well is high. Further, the relation S $\approx$ Kp' arises when the forecast volume of operation calculated by the means for calculating the necessary volume of operation approximates closely to the volume of operation actually required for the encoding operation. Thus, the function G mentioned above is so configured that the Kp may be set at a large (small) magnitude when the parameters M, B, C, S, Wb, and Kp' are large (small).

When the target bit rate is large (small), the quantized step size is set at a large (small) magnitude. As a result, the number of valid blocks generated in the encoding operation and the number of valid coefficients are increased (decreased). When the number of bits generated in the former frame is large (small) as compared with the target bit rate, the value of the quantized step size of the present frame is set at a small (large) magnitude and the number of valid blocks and the number of valid coefficients which occur in the encoding operation decrease (increase). As a result, the function G mentioned above is so configured that the Kp may be set at a large (small) magnitude when the encoding bit rate BR of the present frame is large (small) and the Kp may be set at a small (large) magnitude when the bit rate BR is large (small) as compared with the number D of the bits actually generated in the former frame. Further, by taking into consideration the average quantized step size Qprev of the former frame and the difference $\Delta$Qprev between the average value of the quantized step size of the former frame and the average value of the quantized step size of the frame preceding the former frame by one frame, the Kp calculated by the function G mentioned above is enabled to approximate closely to the volume of operation actually required for encoding the present frame.

(First failure avoiding step) For the purpose of rendering the failure situation difficult to occur, the first failure avoiding means 11 included in the means 2 for calculating the necessary volume of operation is so processed that the necessary volume Kp of operation may be increased by a prescribed magnitude and the calculated necessary volume Kp of operation may enjoy an allowance. To be specific, the necessary volume Kp of operation is increased to m times the normal magnitude (m denotes an actual number of not less than 1). When m = 1.1, for example, is satisfied, the calculated necessary volume Kp of operation is enabled to enjoy an allowance of 10%. Alternatively, the necessary volume Kp of operation may be increased by the addition of a real number n (n denotes a real number of not less than 0). This addition enables the necessary volume of operation to enjoy an allowance of a stated magnitude without reference to the the necessary volume of operation. By following the example cited above, the necessary volume Kp of operation which is finally calculated is determined in accordance with the following formulas.

$$Kp = G(Z) * m \ ... \ \text{(Mathematical 3)}$$

$$Kp = G(Z) + m \ ... \ \text{(Mathematical 4)}$$

Alternatively, the following formula derived by combining these two formulas may be used.

$$Kp = G(Z) * m + n \ ... \ \text{(Mathematical 5)}$$

When the necessary volume Kp of operation found by the calculation is still smaller than the real necessary volume Km of operation of the present frame, the failure situation is avoided by resorting to the operation of a process completion judging means 9 which is the second failure avoiding means as specifically described herein below.

Incidentally, the encoding bit rate 109 of motion pictures, the frame encoding type 108 for selecting the present frame and the former frame severally between the intra frame encoding and the inter frame encoding, the amount of activity 110 of the former frame, and the necessary volume 116 of operation of the former frame calculated by the means for calculating the necessary volume of operation have been memorized in advance in the element memory 8 which is a memory region for storing elements. They are read in the means 2 for calculating the necessary volume of operation during the calculation of the necessary volume Kp of operation and put to use. The average value 107 of the quantized step size of the former frame, the number 111 of times of macro block matching of the former frame, the number 112 of valid blocks of the former frame, the number 113 of valid coefficients of the former frame, the difference 114 between the average value of quantized step size of the former frame and the average value of quantized step size of the frame preceding the former step by one frame, and the amount of process 115 actually required volume of operation for encoding the former frame are fed back from the means 5 for encoding motion pictures to the means 2 for calculating the necessary volume of operation after the former frame has been encoded. In the means 2 for calculating the necessary volume of operation, only one of these elements may be used or a plurality of such elements may be used in combination.

(Step 3) The means 3 for calculating the operating voltage and operating frequency performs a calculation for forecasting the operating frequency Fe (cycle/second) for processing the present frame based on the value of the necessary volume Kp of operation. Since the minimum unit for which the processing time is specified by the method of encoding is one frame and since the operating frequency Fe (cycle/second) required for the present frame, namely the operating frequency Fe (cycle/second) which enables the aforementioned necessary volume Kp of operation to be encoded within the duration Te (second), is expressed by the formula, Fe = Kp/Te, wherein Te (second) denotes the duration allocated to the operation of encoding the present frame, the means 3 for calculating the operating voltage and operating frequency performs the calculation of the operating frequency Fe = Kp/Te. It is provided, however, that the duration Te allocated to the operation of encoding the prescribed frame is the difference obtained by subtracting the duration Tp for forecasting the volume of operation for the prescribed frame and the duration Ts for varying the operating frequency and operating voltage of the processor from the restricted duration Tf for the operation of processing one frame. When the operating voltage and operating frequency supported by the peripheral unit including the processor 1 and (or) the local decoding memory 6 can be varied in r stages (r denotes an integer of not less than 2), the means 3 for calculating the operating voltage and operating frequency performs a calculation for selecting the operating frequency F (r) satisfying F (r) > Fe and F (r-1) < Fe as well as the operating frequency for performing the operation of encoding the present frame, performs a calculation for selecting the operating voltage V (r) befitting the operating frequency, and informs the means 4 for controlling the operating voltage and operating frequency in order that the peripheral unit including the processor 1 and (or) the local decoding memory 6 may be operated with the operating frequency F (r) and the operating voltage V (r) (reference numeral 102).

(Step 4) The means 4 for controlling the operating voltage and operating frequency supplies the values of the operating voltage V (r) and the operating frequency F (r) received from the means 3 for calculating the operating voltage and operating frequency to the peripheral unit including the processor 1 and (or) the local decoding memory 6 (reference numeral 105), and executes a control directed toward operating the processor 1 constantly at the operating voltage V (r) and the operating frequency F (r). As a result, the peripheral unit including the processor 1 and (or) the local decoding memory 6 is fated to operate constantly with the operating voltage V (r) and the operating frequency F (r).

(Step 5) The means 5 for encoding motion pictures is a means which is realized on the processor 1 of the computer by the program Prg 1 for the operation of encoding motion pictures. This means accesses the input image data stored in the input frame memory 7 in the unit for encoding motion pictures by the use of the processor 1 and performs the operation of encoding the relevant input image data. That is, the means 5 for encoding motion pictures acquires the input image data 101 of the present frame from the input frame memory 7 and encodes the input image data 101 to give rise to the encoded data 106. Since the peripheral unit including the processor 1 and (or) the local decoding memory 6 was in the state of being operated constantly with the operating voltage V (r) and the operating frequency F (r) supplied from the means 4 for controlling the operating voltage and operating frequency in Step 4, the means 4 for controlling the operating voltage and operating frequency is destined to operate constantly the peripheral unit containing the processor 1 and (or) the peripheral decoding memory 6 with the operating frequency F (r) and the operating voltage V (r) and the means 5 for encoding motion pictures which effect this encoding by using the processor 1 is destined to encode the present frame in Step 5. The target decrease of the electric power consumption can be attained by causing the peripheral unit including the processor 1 and (or) the local decoding memory 6 to be operated constantly with a high frequency when the images are in a violent motion (the input image data 101 of the present frame) or to operated constantly with a low frequency when the images are in a moderate motion. The means 5 for encoding motion pictures is further provided with a local decoder possessing the function of decoding the encoded data 106. Thus, the encoded data 106 of the present frame are decoded by the local decoder and stored as the local decoded data 103 in the local decoded frame memory 6. The local decoded data 103 of the present frame is used when the necessary volume Kp of operation is calculated with respect to the frame which will be encoded subsequent to the present frame. The encoded data 106 of the present frame is transmitted and accumulated in the storage medium via the transmission line.

(Second failure avoiding step) Further, when the necessary volume Kp of operation calculated by the aforementioned means 2 for calculating the necessary volume of operation is smaller than the real necessary volume of operation of the present frame, the failure situation arises because the process of the present frame is not completed within the duration Te allocated to the operation. Thus, the present system S1 is furnished with a second failure avoiding means which performs the operation of avoiding the failure situation when the operation of encoding the aforementioned one frame is not completed within the duration Te allocated in advance to the operation of encoding or decoding the aforementioned one frame. The present mode of embodiment is endowed with the means 9 for judging completion of the operation as the second failure avoiding means. The means 9 for judging completion of the operation, while the means 5 for encoding motion pictures is executing the routine for encoding the input image data 101 of the present frame at Step 5, interrupts the encoding routine at a prescribed timing, effects a temporary suspension during the course of the process, and judges whether or not the operation of encoding the present frame is completed. When macro blocks which have not been encoded exist, the means 9 for judging completion of the operation judges that

the necessary volume of operation calculated by the aforementioned means for calculating the necessary volume of operation will be smaller than the actual necessary volume of operation and that the process will not be completed within the duration T e. Under this judgement, the means 5 for encoding motion pictures forcedly processes the relevant macro blocks as not-coded blocks. Because encoding the relevant macro blocks as forcedly not-coded blocks requires quite smaller volume of operation than that of encoding the relevant macro blocks as regular macro blocks, it can be possible for the means 5 for encoding motion pictures to avoid failure situation and to complete the process within the duration Te.

Now, the means 9 for judging completion of the operation will be specifically explained below. Fig. 4 shows the relation between the time for effecting the interruption and the residual portion of the operation. It is assumed that T e denotes the duration allocated to the operation performed on the present frame with the operating frequency F, MB the number of macro blocks in one frame, and Ks the necessary volume of operation required in processing one macro block as an forcedly not-coded block. In all of the frame encoding types, the forcedly not-coded block processes are identical with each other, and the volume of operation required for processing a macro block as a forcedly not-coded block is far smaller than the volume of operation required for processing a macro block as a regular block. The means 9 for judging completion of the operation calculates the time T i for effecting the interruption in accordance with the formula, $T i = T e - Ks * MB/F$. The time for effecting the interruption may be calculated by the aforementioned means 3 for calculating the operating voltage and operating frequency. Then, the means 9 for judging completion of the operation effects an interruption in the encoding routine at the timing of the time T i, reads out the number MBi of macro blocks which have undergone the encoding operation (reference numeral 117) from the register 10 of the number of processed macro blocks, judges whether MBi = MB is satisfied or MBi < MB is satisfied, and decides between presence or absence of the completion of the encoding operation. When MBi = MB, a designation of the fact that the operation of encoding the present frame has been completed, is satisfied, this means 9 finishes the interruption and returns to the encoding routine. When MBi < MB, a designation of the fact that the operation of encoding the present frame has not been completed, is satisfied, the means 9 judges that the necessary volume of operation calculated by the means 2 for calculating the necessary volume of operation is smaller than the actually necessary volume of operation. Under this judgement, the means 5 for encoding motion pictures forcedly processes all the macro blocks which have not undergone the encoding operation as not-coded macro blocks, and returns to the encoding routine. The failure situation can be infallibly avoided because the volume of operation for processing at least all the macro blocks in a frame as forcedly not-coded blocks is secured at the point at which the interruption is effected with the timing of the time Ti.

Incidentally, the failure situation may be avoided by exalting the operating frequency and the operating voltage of the processor 1 as will be specifically described herein below instead of the operation of forcedly not-coded blocks.

(Proof)

Now, the fact that the invention of the present patent application can lower the electric power consumption more than the conventional technique which encodes one frame while it changes the operating voltage and the operating frequency of the processor a plurality of times will be demonstrated below. When a specific volume Kt of operation is carried out within a specific duration T t, for example, the decrease of the electric power consumption can be realized by keeping the operating frequency Ft during the duration Tt and setting this frequency Ft as follows.

$$F t = Kt/T t \ ... \ (Mathematical \ 6)$$

It is assumed, for example, that the operating voltage and the operating frequency of the processor 1 are variable in P stages as shown in Fig. 5, the necessary volume of operation for an one frame is denoted by Kt, and the duration allocated to encoding this frame is denoted by T t. On the assumption that the case of setting the operating frequency at F t and the operating voltage used for operating the processor 1 with the operating frequency F t at VDD and completing the process of the necessary volume Kt of operation within the duration T t as shown in Fig. 6 (a) (namely, the operating frequency is fixed) is designated as Case 1 and the case of setting the operating frequency of the initial value at h*F t and the operating voltage used for operating the processor with the operating frequency h*F t at V 1, changing the operating frequency of the processor to h*F t/2 after the elapse of the time T 1, setting the operating voltage used for operating the processor 1 with the operating frequency of h*F t/2 at V2, and completing the process of the necessary volume Kt of operation within the duration of T 1 + T 2 as shown in Fig. 6 (b) (namely, the operating frequency is changed once) is designated as Case 2, let us consider the case of encoding the aforementioned arbitrary one frame with respect severally to Case 1 and Case 2. One and the same volume of operation, namely Kt (cycle), is required for both the cases. Meanwhile, the electric power consumed is represented as follows,

$$P = \alpha * C * f * VDD^2 * t \ ... \ (Mathematical \ 7)$$

wherein $\alpha$ denotes a coefficient, C denotes the number of transistors of the processor, f denotes the operating frequency, VDD denotes the operating voltage, and t denotes the operating time. By the calculation in accordance with this formula, the electric power consumption Pa of Case 1 and the electric power consumption Pb of Case 2 are found as follows,

$$Pa = \alpha * C * F t * V^2 * T t \ ... \ (Mathematical \ 8)$$

$$Pb = \alpha * C * (h * F t) * V1^2 * T 1 + \alpha * C * (h * F t /2) * V2^2 * T2 \ ...$$
$$(Mathematical \ 9)$$

and

$$Pa : Pb = V^2 * T\,t : (h * V1^2 * T\,1 + (h/2) * V2^2 * T2) ... \text{(Mathematical 10)}$$

Assume h=1.5, T1=1/3*Tt, Tb=2/3*Tt, V=1, V1=1.5, and V2=0.75, and the ratio will be found as follows.

$$Pa : Pb = 1^2 : (1.5 * 1.5^2/3 + (1.5/2) * 0.75^2 * (2/3) \approx 1 : 1.41 ... \text{(Mathematical 11)}$$

Thus, the relation Pa < Pb is ascertained. It is clear, therefore, that when a fixed volume of operation is processed within a fixed duration, in spite of one and the same volume K t of operation, the electric power consumption is lower when the processor is constantly operated throughout the time of process with the smallest operating frequency that enables the operation to be completed within the duration as in Case 1 than when the operating frequency is changed during the time of the process as in Case 2 using the conventional technique. It is further clear that this invention which carries out the operation of encoding one frame while it is operating the processor 1 with fixed operating voltage and operating frequency can lower the electric power consumption than the conventional technique which changes the operating voltage and the operating frequency a number of times during the process of encoding one frame because the operating voltage and the operating frequency are decided for each of the blocks involved.

(Second mode of embodiment)

Fig. 7 is a schematic block diagram showing the performance of a motion picture encoding system S2 of the second mode of embodiment. The motion picture encoding system S2 of the present mode of embodiment is derived from the motion picture encoding system S1 of the first mode of embodiment described above by being provided as a second failure avoiding means at least with a means 29 for judging the residual portion of the volume of operation in the place of the means 9 for judging completion of the operation and the processed macro block number resister 10. Fig. 8 is a diagram showing a motion picture encoding program Prg 2 and a schematic flow chart of a motion picture encoding method which is materialized by that program. The program Prg 2 is a program for causing the computer to function as the motion picture encoding system S2 furnished with various means and is furnished with a second failure avoiding step which is executed with an action of interrupting the encoding operation (Step 5). The motion picture encoding system S2, unlike the aforementioned motion picture encoding system S1, is directed toward solving the problem mentioned above by executing the dynamic control of the operating voltage and working frequency which consists in changing the operating frequency and the operating voltage at which the peripheral unit including the processor 1 and (or) the local decoded memory 6 operate. Now, the dynamic control of the operating voltage and operating frequency will be described in detail below.

The operating frequency and the operating voltage used for processing the present frame are calculated by the means 3 for calculating the operating voltage and operating frequency based on the numerical values calculated by the means 2 for calculating the necessary volume of operation. When the value of the calculated necessary volume Kp of operation is smaller than the necessary volume Km of operation actually required for processing the present frame, the operating frequency and the operating voltage calculated based on the value of the necessary volume Kp of operation is also smaller than the operating frequency and the operating voltage befitting the actual process of the present frame.

(Second failure avoiding step) The motion picture encoding system S2, like the aforementioned motion picture encoding system S1, provides the means 5 for encoding motion pictures with N times of equally spaced interrupting points, effects temporary interruption of the encoding operation, and at the point of interruption, relies on the means 29 for judging the residual portion of the volume of operation to compare the residual portion Ki of operation which is the residual portion of the necessary volume of operation of the present frame calculated by the means 2 for calculating the necessary volume of operation with the residual portion of the actual necessary volume of operation during the operation of encoding the prescribed frame by the means 5 for encoding motion pictures. That is, in the first operation of interruption, the means 29 for judging the residual portion of operation determines the residual duration T i allocated to the process of the present frame and the operating frequency F of the processor 1 and calculates the remaining portion Ki of operation in accordance with the formula Ki = Ti * F. Then, the means 29 for judging the residual portion of operation retains the times, T1, T2, ..., T (i - 1), at which the first through (i - 1)th interruptions are effected and the operating frequencies, F1, F2, ..., F(i-1), of the processor at the individual points of interruption and, based on these values, calculates the volume Kpm of operation spent in the operation of processing the present frame from the point at which the process of the present frame is started till the point at which the i'th interruption occurs in accordance with the formula, Kpm = ∑ Fj * (T (j + 1) - Tj). F0 denotes the operating frequency which was set when the process of the present frame was started, and j equals 0, 1, ..., or (i - 1). Then, the means 29 for judging the residual portion of the volume of operation judges which equation is satisfied, $Ki \geq Kpm * (MB - MBi)/MBi$ or $Ki < Kpm * (MB - MBi)/MBi$. The operation of interruption is terminated and the process is returned to the encoding routine when the calculated residual component $Ki$ of the volume of operation and the volume $Kpm$ of operation spent in the process of the present frame satisfy the formula, $Ki \geq Kpm * (MB - MBi)/MBi$. The means 5 for encoding motion pictures continues the process of the present frame till the point at which the (i + 1)th interruption occurs. The means 29 for judging the residual portion of the volume of operation, when the calculated residual component $Ki$ of the volume of operation and the volume $Kpm$ of arithmetic operation spent in the process of the present frame satisfy the formula, $Ki \geq Kpm * (MB - Mbi)/MBi$, judges that the necessary volume of operation calculated by the means 2 for calculating the necessary volume of operation is smaller than the volume of operation actually required and gives the means 4 for controlling the operating voltage and operating frequency an instruction to increase the operating voltage and the operating frequency by one step (reference numeral 104). This instruction, when necessary, may be directed toward increasing these factors by two or more steps. Incidentally, MB denotes the total number of macro blocks contained in the present frame and MBi denotes the number of macro blocks which have undergone the encoding operation of the present frame at the point at which the i-th interruption occurs. Since the provision of the process described above enables the operating frequency of the processor to be increased halfway along the entire course of the process of the present frame, it ensures completion of the process of the present frame without entailing the failure situation even when the operating frequency set for the processor at the point at which the process of the present frame is started is smaller than the operation frequency necessary for realizing the volume of operation necessary for the process of the present frame. Incidentally, the N points at which the means 5 for encoding motion pictures is interrupted do not need to be separated by equal intervals but may be separated by arbitrary intervals. Optionally, the formula $Ki \geq Kpm * (BL - BLi)/BLi$ and the formula $Ki < Kpm * (BL - BLi)/BLi$ may be used in the place of the formula $Ki \geq Kpm * (MB - MBi)/MBi$ and the formula $Ki < Kpm * (MB - MBi)/MBi$. In these formulas, BL denotes the total number of blocks contained in the present frame and BLi denotes the number of processed blocks of the present frame at the point at which the i-th interruption occurs.

Incidentally, the present system S2 may be provided with the first failure avoiding means 11.

(Third mode of embodiment)

The motion picture decoding system S3 according to the third mode of embodiment is a system for decoding the encoded motion pictures. Fig. 9 is a schematic block diagram showing the performance of the motion picture decoding system S3. The motion picture decoding system S3 of the present mode of embodiment is provided with the processor 1 furnished with operating voltages and operating frequencies prepared in r steps (r denotes an integer of not less than 2) and enabled to change these operating voltages and operating frequencies by a program, the operating voltage and operating frequency controlling means 4 for controlling the operating voltage and the operating frequency of the processor 1 mentioned above, a local decoding frame memory 36 for storing the decoded data of the former frame, and a means 39 for judging the residual portion of the volume of operating operation and operating on the processor 1. It is provided, however, that the local decoding memory 36 may have the operating voltage and operating frequency thereof controlled by the means 4 for controlling the operating voltage and operating frequency similarly to the processor 1. The processor 1 is provided with a means 32 for calculating the necessary volume of operation and operating on the processor 1, the means 3 for calculating the operating voltage and operating frequency and operating on the processor 1, and a motion picture decoding means 35 operating on the processor 1. The reference numeral 301 denotes an input encoding data, the reference numeral 102 denotes the designation of the operating voltage and operating frequency, the reference numeral 105 denotes the supply of the operating voltage and operating frequency, and the reference numeral 306 denotes a decoded data and the same reference numerals in the first mode of embodiment denote the parts fulfilling identical or equivalent functions. Excepting the fact that the system is about decoding system and the facts other than the following facts, third mode of embodiment are the same as those of the second mode of embodiment.

The performance of the motion picture decoding system S3 will be explained below with reference to Fig. 9. Now, the operation of decoding the present frame will be explained below on the assumption that an arbitrary one frame to be decoded in all the frames decoded sequentially (namely, the frame to be decoded next based on the point at which a certain frame was decoded, i.e. the frame not decoded yet at that point and scheduled to be decoded in the future) is designated as the present frame and one frame decoded before the present frame (the frame decoded in the past) is designated as the former frame. One and the same process is performed on any one of the frames. The motion picture decoding program Prg3 which causes the computer to function as the motion picture decoding system S3 is substantially the same as the aforementioned motion picture encoding program Prg1. At Step 5, it causes the computer (more specifically, the processor 1 built in the computer) to function as the motion picture decoding means 35 for decoding the encoded data of the present frame. The input encoded data 301 which has been fed in the motion picture decoding system S3 is fed in the means 32 for calculating the necessary volume of operation. The means 32 for calculating the necessary volume of operation calculates the amount (number of bits) FB of generated information for one frame of the encoded data 301 (namely, the encoded data 301 of the present frame) and performs a calculation for forecasting the necessary volume Kp of operation. The necessary volume Kp of operation is expressed by the following formula.

$$Kp = G\ (FB,\ MVa,\ MVv,\ B,\ C,\ BR,\ Q,\ \Delta Q,\ I,\ E,\ P)\ ...\ (Mathematical\ 11)$$

In this formula, FB denotes the number of bits of the encoded data of the present frame or the former frame, MVa denotes the average value of the size of the vector of motion of the present frame or the former frame, MVv denotes the dispersion of the size of the vector of motion of the present frame or the former frame, B denotes the number of valid blocks of the present frame or the former frame, C denotes the number of valid coefficients of the present frame or the former frame, BR denotes the bit rate of the present frame or the former frame, Q denotes the average value of the quantized step size of the present frame or the former frame, $\Delta Q$ denotes the difference between the average values of the quantized step sizes of the present frame and the former frame or the difference between the average values of the quantized step sizes of the former frame and the frame preceding the former frame, I denotes the frame encoding mode of the choice among I frame, P frame, and B frame of the present frame, E denotes the volume of operation actually required for decoding the former frame, and P denotes the necessary volume of operation of the former frame calculated by the means for calculating the necessary volume of operation.

The volume of operation necessary for decoding the present frame depends on the number of times of the IDCT process, the IQ process, and the VLD process executed in decoding the present frame. Then, the number of times of execution of the IDCT process depends on the number of valid blocks contained in the present frame and the numbers of times of execution of the IQ process and the VLD process depend on the number of valid coefficients contained in the present frame. That is, the volume of operation required for the decoding operation increases (decreases) when the number of valid blocks and the number of valid coefficients contained in the present frame are large (small). The aforementioned function G, therefore, is so configured that Kp may be set at a large (small) value when B and C are large (small).

The average value MVa of the size of the vector of motion and the dispersion MVa of the size of the vector of motion are increased (decreased) when the change of images between the former frame and the present frame is large (small). In this case, the number of valid blocks and the number of valid coefficient in the present frame are increased (decreased) and the volume of operation necessary for the encoding operation is increased (decreased). The function G mentioned above, therefore, is so configured that Kp may be set at a large (small) value when MVa and MVv are large (small).

When the present frame consists of I frame, the volume of operation required for the decoding operation decreases because the addition of the forecast image and the differential image does not need to be effected in forming the decoded data. The function G mentioned above, therefore, is so configured that Kp may be set at a small value when the present frame consists of one picture.

The number of valid blocks and the number of valid coefficients are increased (decreased) when the number FB of bits and the frame rate BR of the encoded data is large (small). The function G mentioned above, therefore, is so configures that Kp may be set at a large (small) value when FB and BR are large (small). The quantized step size has the value thereof varied in controlling the bit rate. When Q and $\Delta Q$ are large (small), for example, the Kp calculated by the function G mentioned above is enabled to approximate closely to the volume of operation actually required for the purpose of decoding the present frame by paying due respect to the average value Q of the quantized step size and the difference $\Delta Q$ of the average value of the quantized step size as by setting the Kp at a small (large) value.

Since the motion pictures have a large correlation between the continued frames, MVa, MVv, B, C, BR, FB, and Q assume close values between the present frame and the former frame. When these parameters are used in the function G mentioned above, therefore, their values in the present frame may be used or those in the former frame may be used. When the values in the present frame are used, part of the input encoded data which have been received are decoded and the values consequently derived are put to use. In this case, the use of the values in the present frame is at an advantage in enabling the forecast volume Kp of operation to approximate closely to the necessary volume of operation actually required for the decoding operation. When the value in the former frame is used, the forecast volume Kp of operation can be calculated before the input encoded data of the present frame are received. Thus, the value so used is at an advantage in enabling the decoding operation of the received data to be carried out at the same time that the input encoded data are received.

Further, since the motion pictures have a large correlation between the continuing frames, the necessary volume of operation required for the decoding operation of the present frame approximates closely to the value E of operation actually necessary in the decoding operation of the former frame. Further, the approximation, $P \approx E$, arises when the forecast volume of operation calculated by the means for calculating the necessary volume of operation approximates closely to the value of operation actually required for the decoding operation. By duly considering E and P in order that the necessary volume of operation of the present frame may enable E and P to assume values increased or decreased in conformity with the sizes of such parameters as FB, MVa, MVv, B, C, BR, Q, and $\Delta Q$, the Kp calculated

by the function G mentioned above is enabled to approximate closely to the necessary volume of operation actually required for decoding the present frame.

The means 32 for calculating the necessary volume of operation may use only one of these elements or a plurality of such elements in combination. That is, the plurality of these elements affect the necessary volume of operation which is required for the operation of decoding the present frame. When the means 32 for calculating the necessary volume of operation carries out the calculation so as to increase or decrease the necessary volume Kp (cycle) of operation in conformity with these elements, therefore, the necessary volume Kp of operation calculated by the means 32 for calculating the necessary volume of operation approximates closely to the calculated value obtained when the decoding operation is actually carried out.

The means 3 for calculating the operating voltage and operating frequency and the means 4 for controlling the operating voltage and operating frequency are the same as those of the first mode of embodiment. The means 35 for decoding motion pictures decodes the input encoded data 305 of the present frame and gives rise to the decoded data 306. In the decoding operation by the means 35 for decoding motion pictures, the decoding operation is performed while the processor 1 is caused by the means 4 for controlling the operating voltage and operating frequency to operate with fixed operating voltage and operating frequency. Since the necessary volume of operation for each frame is calculated before the operation of decoding this frame and the frame is decoded while the processor is operated with fixed operating frequency and operating voltage befitting the necessary volume of operation, the decrease of the electric power consumption can be efficiently attained as compared with the conventional technique which changes the operating frequency and the operating voltage for each of the stated number of blocks obtained by dividing the frame. The decoded data 306 is displayed as motion pictures in a portable telephone or the image display part of a personal computer or memorized in a memory device such as a hard disc.

The motion picture decoding system S3 is likewise provided with the means 39 for judging the residual portion of the volume of operation as a second failure avoiding means. The means 39 for judging the residual portion of the volume of operation is substantially the same as in the second mode of embodiment mentioned above but is different in respect that the judgment is directed toward the calculated volume of the decoding operation and not to the calculated volume of the encoding operation. The failure situation can be avoided by the means 39 for judging the residual portion of the volume of operation. As in the first mode of embodiment mentioned above, the present mode of embodiment may be provided with a means for judging completion of the operation as a first failure avoiding means. Incidentally, the decoding operation is not furnished with a means for judging completion of the operation and does not perform the forcedly not-coded block operation.

The motion picture encoding system of this invention may be provided with the first failure avoiding means 11, the means 9 for judging completion of the operation as the second failure avoiding means, and the means 29 and 39 for judging the residual portion of the volume of operation as the second failure avoiding means. These components may be used either singly or in the form of a proper combination of two or more members. The failure avoiding operation may be implemented, for example, by adopting the first and the second failure avoiding means all together, and when the failure cannot be avoided by increasing the necessary volume of operation by the first failure avoiding means 11, increasing the operating voltage and the operating frequency by the means 29 and 39 for judging the residual portion of the volume of operation as the second failure avoiding means and, when the failure situation still cannot be avoided, simplifying the encoding operation by the means 9 for judging completion of the operation as the second failure avoiding means. The motion picture encoding program mentioned above may be realized with a hard ware which is furnished with the same function as a program.

(Example 1)

Example 1 of the motion picture encoding system S1 in the first mode of embodiment will be explained. A motion picture data formed of 75 frames was used as the object for encoding and a 32nd frame was chosen as the frame to be encoded. Each frame was formed of picture elements arrayed in 144 lines and 176 columns. For the encoding operation, MPEG-4 was used. The processor 1 of the motion picture encoding system S 1 was operated with an operating frequency in the range of 189 MHz - 405 MHz and an operating voltage in the range of 1.06 V - 1.80 V and adapted to vary in 9 steps separated by intervals of 27 MHz of operating frequency and 0.0925 V of operating voltage.

First, the motion picture encoding system S1 secured access to the input frame memory 7, acquired the 32nd frame, and calculated the necessary volume Kp of operation with the aid of the means 2 for calculating the necessary volume of operation. Specifically for the calculation of the necessary volume Kp of operation, the sum Z of the sum of absolute difference values was calculated in accordance with the following formula using the first frame and the 31st frame.

$$Z = \Sigma \left| X_{ij} - Y_{ij} \right| = 202752$$

Then, the amount W of activity of the 32nd frame which was the present frame was calculated in accordance with the following formula.

$$\text{Wh in horizontal direction} = \Sigma|X(i,j) - X(i - 1, j)| = 76032$$

$$\text{Wv in vertical direction} = \Sigma|X(i,j) - X(i, j-1)| = 126720$$

Further, the number of times of macro block matching of the former frame M = 1580, the average quantized step size of the former frame (average value of quantized step sizes) Qprev = 4, the number of valid blocks of the former frame B = 399, the number of valid coefficients of the former frame C = 6011 the amount of process actually required for the encoding of the former frame S = 15447105, and the encoding bit rate of the present frame BR = 65536 were obtained. Then, the difference between the average value of the quantized step size of the former frame and the average value of the quantized step size of the 30th frame which preceded the former frame by one frame $\triangle$Qpev = -1 was calculated. Further, the number of bits actually generated in the former frame D = 56797 was obtained. Then, the necessary volume of operation Kp was calculated in accordance with the following formula using the component elements enumerated above.

$$Kp = j + \alpha M + \beta B + \gamma C + \delta Z + \varepsilon\Delta Qprev$$

As a result, the necessary volume of operation in Example 1 Kp = 14481056 was obtained.

Further, a calculation for increasing the necessary volume Kp of operation was carried out in accordance with the following formula using the aforementioned necessary volume of operation calculated from the component elements enumerated above Kp = 14481056. Here, the aforementioned mathematical 3 will be used for the explanation.

$$Kpf = 14481056 * 1.1 = 15929162$$

Then, the operating frequency was calculated in accordance with the following formula.

$$Fe = Kpf/Te = 15929162/(1/15) = 239 \text{ MHz}$$

By calculating F (r) which satisfied F(r) > Fe and F(r-1) < Fe as well, an operating frequency 243 MHz was selected as the operating frequency satisfying these relations in all the operating frequencies variable in the nine steps of the processor land an operating voltage of 1.25 V was selected as well. The means 4 for controlling the operating voltage and operating frequency was given an instruction directed toward enabling at least the processor 1 to operate with the operating frequency F (r) = 243 MHz and the operating voltage V (r) = 1.25 V befitting the frequency. The means 4 for controlling the operating voltage and operating frequency effected a control aimed at causing at least the processor 1 to operate constantly with an operating voltage of 243 MHz and an operating frequency of 1.25 V. The means 5 for encoding the motion pictures acquired the frame F from the input frame memory 7 and performs an encoding operation and gave rise to encoded data with the air of the processor 1 which was in a state of being constantly operated with the operating frequency 243 MHz and the operating voltage of 1.25 V mentioned above.

Further, while the encoding routine was being executed, the means 9 for judging completion of the operation calculated the time for interruption in accordance with the following formula and effected necessary interruption.

$$Ti = Te - Ks * MB/F$$
$$= 0.06666 - 37 * 99/(243000000)$$
$$\approx 0.06665$$

Further, the means 9 for judging completion of the operation judged whether or not MBi < MB was satisfied at this interrupting timing. In Example 1, since MBi < MB was satisfied at the timing of Ti = 0.06665 and the operation of encoding the present frame was not completed, all the remaining macro blocks are processed as forcedly not-coded macro block and returned to the encoding routine.

(Example 2)

Example 2 dealing with the motion picture encoding system S2 of the second mode of embodiment will be explained below. In Example 2, this system was configured so as to effect interruption four times in the encoding operation. The means 29 for judging the residual portion of the volume of operation calculated Ki = Ti * F and Kpm = ∑Fj * (T(j + 1) - Tj) respectively at the points of the first and the second interruption, calculated the residual portion of the actually necessary volume of operation Kpm * (MB - MBi), and judged the choice between Ki ≥ Kpm * (MB - MBi)/MBi and Ki < Kpm * (MB - MBi)/MBi. In Example 2, since Ki ≥Kpm * (MB - MBi)/MBi was satisfied the process completed the interrupting operation and caused the means 5 for encoding the series images to continue the encoding operation till the third interruption. The same calculation and judgment were carried out during the third interruption which was the next interruption. Since Ki < Kpm * (MB - MBi)/MBi was satisfied in Example 2, the means 4 for controlling the operating voltage and operating frequency was given an instruction directed toward increasing the operating frequency and the operating voltage by one step respectively to a frequency Fp + 1 = 270 MHz and a voltage Vp + 1 = 1.34 and using them as the operating frequency and the operating voltage.

Industrial Applicability

The motion picture encoding or decoding system and the motion picture encoding or decoding method according to this invention perform a calculation for forecasting a necessary volume of operation required for encoding or decoding a present frame yet to be encoded or decoded (a frame to be encoded or decoded in the future), controls the present frame substantially constantly with the smallest possible operating frequency within the duration allocated to the process of the present frame, consequently controls dynamically the operating voltage and operating frequency in the unit of frames, and realizes the decrease of the electric power consumption as described above.
Since they are furnished with a failure avoiding means, the failure situation which occurs when the calculated necessary volume of operation is smaller than the volume of operation actually required can be avoided the motion pictures which have undergone the encoding or decoding operation can be prevented from being deteriorated.

**Claims**

1. A motion picture encoding or decoding system, **characterized by** being furnished with a processor for encoding or decoding motion pictures formed of a plurality of frames in the unit of frames and provided with at least one failure avoiding means adapted to calculate a necessary volume Kp of operation required for encoding or decoding one frame, decide an operating frequency F capable of encoding or decoding the necessary volume Kp of operation within a duration T e allocated in advance to the operation of encoding or decoding the one frame, perform the operation of encoding or decoding the one frame while continuing the operation of the processor at the operating frequency F and an operating voltage V befitting the operating frequency F, and avoid the failure situation which occurs when the necessary volume Kp of operation is smaller than the actually necessary volume of operation.

2. A motion picture encoding or decoding system according to claim 1, wherein the necessary volume Kp of operation to be used in implementing the operation of encoding motion pictures on the assumption that the frame in the plurality of sequential frames which is subjected to the encoding operation prior to the aforementioned one frame is designated as the preceding frame is calculated by using at least one of the elements comprising the amounts of motion of the aforementioned one frame and the preceding frame, the amount of activity of the aforementioned one frame, the amount of activity of the preceding frame, the average value of the quantized step size of the preceding frame, the difference between the average value of the quantized step size of the preceding frame and the average value of the quantized step size of the frame further preceding the preceding frame, the number of times of macro block matching of the preceding block, the number of valid blocks of the preceding frame, the number of valid coefficients of the preceding frame, the volume of operation actually required in encoding the preceding frame, the number of bits occurring in the preceding frame, the encoding bit rate of the aforementioned one frame, the frame type of operation selected between the intra frame encoding and the inter frame encoding t be performed on the aforementioned one frame, and the necessary volume of operation for the preceding frame.

3. A motion picture encoding or decoding system according to claim 1, wherein the necessary volume Kp of operation to be used in implementing the operation of decoding motion pictures on the assumption that the frame in the plurality of sequential frames which is subjected to the decoding operation prior to the aforementioned one frame is designated as the preceding frame is calculated by using at least one of the elements which comprise the number of bits of the encoding data of the aforementioned one frame, the frame encoding type selected between the intra frame encoding and the inter frame encoding which has been performed in the aforementioned one frame, the average value of the magnitude of motion vector of the aforementioned one frame or the preceding frame, the dispersion of the magnitude of the motion vector of the aforementioned one frame or the preceding frame, the number of valid blocks of the aforementioned one frame or the preceding frame, the number of valid coefficients of the aforementioned one frame or the preceding frame, the bit rate of the aforementioned one frame or the preceding frame, the amount of codes of the aforementioned one frame or the preceding frame, the average value of the quantized step size of the aforementioned one frame or the preceding frame, the difference of the average values of the quantized step size (the difference between the quantized step sizes of the aforementioned one frame and the frame further preceding the preceding frame or the difference between the quantized step size of the frame preceding by one frame and the quantized step size of the frame preceding by two frames), the necessary volume of operation actually required for decoding the preceding frame, and the necessary volume of operation for the preceding frame.

4. A motion picture encoding or decoding system according to any of claims 1 - 3, which is provided with a first failure avoiding means capable of increasing the necessary volume Kp of operation as the failure avoiding means.

5. A motion picture encoding or decoding system according to claim 4, wherein the first failure avoiding means multiplies the necessary volume Kp of operation by m (m denoting a real number of not less than 1) or adds to the necessary volume Kp of operation a real number n which is larger than 0.

6. A motion picture encoding or decoding system according to any of claims 1 to 5, which is provided with a second failure avoiding means capable of performing an operation of avoiding the failure situation when the operation of encoding the one frame is not completed within the duration Te allocated in advance to the operation of encoding or decoding the one frame as the failure avoiding means.

7. A motion picture encoding or decoding system according to claim 6, wherein the second failure avoiding means effects interruption in the encoding operation at a prescribed timing and, when macro blocks not yet encoded arise, subjects the macro blocks to forcedly not-coded blocks.

8. A motion picture encoding or decoding system according to claim 6, wherein the second failure avoiding means effects interruption in the encoding or decoding operation at a prescribed timing and, when the residual portion of the necessary volume Kp of operation at the point of the interruption is smaller than the residual portion of the necessary volume of operation actually necessary for the encoding or decoding operation, increases the operating frequency and the operating voltage of the processor.

9. A motion picture encoding or decoding system according to any of claims 1 to 8, wherein the processor possesses operable operating frequencies prepared in r steps (r denoting an integer of not less than 2), calculates the operating frequency Fe necessary for processing the necessary volume of operation within the duration Te in accordance with the formula, Fe = Kp/Te, and decides the operating frequency F exceeding the necessary operating frequency Fe and approximating most closely to the operating frequency Fe from the operable operating frequency.

10. A motion picture encoding or decoding method, **characterized by** using a processor for encoding or decoding motion pictures formed of a plurality of frames in the unit of frames and possessing at least one failure avoiding means adapted to calculate a necessary volume Kp of operation required for encoding or decoding one frame, decide an operating frequency F capable of encoding or decoding the necessary volume Kp of operation within a duration T e allocated in advance to the operation of encoding or decoding the one frame, perform the operation of encoding or decoding the one frame while continuing the operation of the processor at the operating frequency F and an operating voltage V befitting the operating frequency F, and avoid the failure situation which occurs when the necessary volume Kp of operation is smaller than the actually necessary volume of operation.

11. A motion picture encoding or decoding method according to claim 10, wherein the necessary volume Kp of operation to be used in implementing the operation of encoding motion pictures on the assumption that the frame in the plurality of sequential frames which is subjected to the encoding operation prior to the aforementioned one frame is designated as the preceding frame is calculated by using at least one of the elements comprising the amounts of motion of the aforementioned one frame and the preceding frame, the amount of activity of the aforementioned one frame, the amount of activity of the preceding frame, the average value of the quantized step size of the preceding frame, the difference between the average value of the quantized step size of the preceding frame and the average value of the quantized step size of the frame further preceding the preceding frame, the number of times of macro block matching of the preceding block, the number of valid blocks of the preceding frame, the number of valid coefficients of the preceding frame, the volume of operation actually required in encoding the preceding frame, the number of bits occurring in the preceding frame, the encoding bit rate of the aforementioned one frame, the frame encoding type selected between the intra frame encoding and the inter frame encoding t be performed on the aforementioned one frame, and the necessary volume of operation for the preceding frame.

12. . A motion picture encoding or decoding method according to claim 10, wherein the necessary volume Kp of operation to be used in implementing the operation of decoding motion pictures on the assumption that the frame in the plurality of sequential frames which is subjected to the decoding operation prior to the aforementioned one frame is designated as the preceding frame is calculated by using at least one of the elements which comprise the number of bits of the encoding data of the aforementioned one frame, the kind of operation selected between the intra frame encoding and the inter frame encoding which has been performed in the aforementioned one frame, the average value of the magnitude of motion vector of the aforementioned one frame or the preceding frame, the dispersion of the magnitude of the motion vector of the aforementioned one frame or the preceding frame, the number of valid blocks of the aforementioned one frame or the preceding frame, the number of valid coefficients of the aforementioned one frame or the preceding frame, the bit rate of the aforementioned one frame or the preceding frame, the amount of codes of the aforementioned one frame or the preceding frame, the average value of the quantized step size of the aforementioned one frame or the preceding frame, the difference of the average values of the quantized step size (the difference between the quantized step sizes of the aforementioned one frame and the frame further preceding the preceding frame or the difference between the quantized step size of the frame preceding by one frame and the quantized step size of the frame preceding by two frames), the necessary volume of operation actually required for decoding the preceding frame, and the necessary volume of operation for the preceding frame.

13. A motion picture encoding or decoding method according to any of claims 10 to 12, which is provided with a first failure avoiding step capable of increasing the necessary volume Kp of operation as the failure avoiding step.

14. A motion picture encoding or decoding method according to claim 13, wherein the first failure avoiding means multiplies the necessary volume Kp of operation by m (m denoting a real number of not less than 1) or adds to the necessary volume Kp of operation a real number n which is larger than 0.

15. A motion picture encoding or decoding method according to any of claims 10 to 14, which is provided with a second failure avoiding means capable of performing an operation of avoiding the failure situation when the operation of encoding the one frame is not completed within the duration Te allocated in advance to the operation of encoding or decoding the one frame as the failure avoiding means.

16. A motion picture encoding or decoding method according to claim 15, wherein the second failure avoiding means effects interruption in the encoding operation at a prescribed timing and, when macro blocks not yet encoded arise, subjects the macro blocks to forcedly not-coded blocks.

17. A motion picture encoding or decoding method according to claim 15 or claim 16, wherein the second failure avoiding means effects interruption in the encoding or decoding operation at a prescribed timing and, when the residual portion of the necessary volume Kp of operation at the point of the interruption is smaller than the residual portion of the necessary volume of operation actually necessary for the encoding or decoding operation, increases the operating frequency and the operating voltage of the processor.

18. A motion picture encoding or decoding method according to any of claims 10 to 17, wherein the processor possesses operable operating frequencies prepared in r steps (r denoting an integer of not less than 2), calculates the operating frequency Fe necessary for processing the necessary volume of operation within the duration Te in accordance with the formula, $Fe = Kp/Te$, and decides the operating frequency F exceeding the necessary operating frequency Fe and approximating most closely to the operating frequency Fe from the operable operating frequency.

EP 1 615 438 A1

Fig1

22

Fig2

EP 1 615 438 A1

Operating voltage · operating frequency control circuit    4a

100e

Processor core

1a

100r    Instruction cache memory
1b

100s    Data cache memory
1c

1

100u

PLL
4b    100a

Operating frequency signal

100l

Bus controller

BC

100v    DC-DC converter
4c    100b

Operating voltage supply

100k

B1

100j    100o    100p    100q    100m

Memory

MR

Input frame memory(#0)
7a

Input frame memory(#1)
7b

Display interface
DI

Bit stream interface
BI

CA

100t    100n

Video data output

Bit stream output

B2    100i    100h

100g

Camera Interface    CI

100f

Video data input

Fig3

START
(Process of prescribed frame)

Input of image information of
from
(step 1)

Calculation of necessary volume
K of arithmetic operation
(step 2)

Calculation of operating
frequency operating voltaga
(step 3)

Control of processor
(step 4)

Encoding
(step 5)

Start of interruption

Judgment of completion of process
(Reading of number of processed
macro blocks)

Completion of interruption

MBi<MB ?

N

Y

Disposal of residual macro
blocks as ineffective blocks

END
(To next frame)

24

Fig4

Fig5

| Operating frequency (cycle/second) | Operating voltage (V) |
|---|---|
| f (1) | V (1) |
| f (2) | V (2) |
| f (3) | V (3) |
| . | . |
| f (r) | V (r) |

When t>s (t and s denotes natural numbers of not more than r)

f (t) > f (s)

V (t) > f (s)

Fig6

(a)                          (b)

Case 1                      Case 2

Fig7

CA

S2

Local decoded data 103

Local decoded frame memory 6

Encoded data 106

Input image data 101

Input frame memory 7

Means for calculation of necessary volume of arithmetic operation 2 (first failure avoiding means 11)

Element memory 8 108, 109 110, 116

Means for encoding sequence images 5 (MPEG4,etc.)

Start of interruption (temporary suspension)

Completion of interruption

1

Means for calculating operating voltage·operating frequency 3

107, 111, 112, 113, 114, 115

Means for judging residual portion of volume of arithmetic operation 29

102

104

105

Means for controlling operating voltage·operating frequency 4

Fig8

START
(Process of prescribed frame)

Input of image information of
from
(step 1)

Calculation of necessary volume
K of arithmetic operation
(step 2)

Calculation of operating
frequency operating voltaga
(step 3)

Control of processor
(step 4)

i = 1

Encoding
(step 5)

Completion of interruption

i = i + 1

i > N ?   N

Start of interruption

Calculation of residual portion of
volume of arithmetic operation
$Ki = Ti \times F$

Y

$Ki \geq Kpm \times (MB - Mbi)/MBi$ ?   N

Y

Indication of operating voltage・
operating frequency
(reference numeral 104)

END
(To next frame)

Fig9

S1

CA

1

Input encoded
data 301

Local decoded
frame memory 36

306

Means for calculation
necessary volume of
arithmetic operation
32

Means for
decoding
sequence
images 35
(MPEG4,etc.)

Interruption
(temporary
suspension)

Completion of
interruption

Means for
calculating operating
voltage·operating
frequency 3

Means for judging residual
portion of volume of
arithmetic operation 39

102

104

105

Means for controlling operating voltage·operating frequency 4

• Fig910

Operating frequency f2 is selected for time slot 3

Fig11

## INTERNATIONAL SEARCH REPORT

| | International application No. |
|---|---|
| | PCT/JP2004/005394 |

**A. CLASSIFICATION OF SUBJECT MATTER**
Int.Cl⁷  H04N7/24

According to International Patent Classification (IPC) or to both national classification and IPC

**B. FIELDS SEARCHED**

Minimum documentation searched (classification system followed by classification symbols)
Int.Cl⁷  H04N7/24-7/68, G06F1/26-1/32

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
IEEE Xplore(English)

**C. DOCUMENTS CONSIDERED TO BE RELEVANT**

| Category* | Citation of document, with indication, where appropriate, of the relevant passages | Relevant to claim No. |
|---|---|---|
| Y | JP 9-9251 A  (Hitachi, Ltd.), 10 January, 1997 (10.01.97), Par. Nos. [0004], [0007], [0017], [0018]; Fig. 5 (Family: none) | 1-18 |
| Y | Hiroshi KAWAGUCHI et al., An LSI for $V_{DD}$-Hopping and MPEG4 System Based on the Chip, The 2001 IEEE International Sympo sium on Circuits and Systems, 2001, ISCAS 2001, 06 May, 2001 (06.05.01), Vol.4, pages 918 to 921 | 1-18 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 July, 2004 (27.07.04) | 10 August, 2004 (10.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 615 438 A1**

**INTERNATIONAL SEARCH REPORT**

International application No.

PCT/JP2004/005394

C (Continuation).  DOCUMENTS CONSIDERED TO BE RELEVANT

| Category* | Citation of document, with indication, where appropriate, of the relevant passages | Relevant to claim No. |
|---|---|---|
| Y | Fuminori OSAKO et al., "Doteki Enzanryo Scalable Algorithm ni yoru Software Gazo Fugoka", The Institute of Electronics, Information and Communication Engineers Ronbunshi D-II, 25 February, 1997 (25.02. 97), Vol.J80-D-II, No.2, pages 444 to 458 | 1-18 |
| Y | JP 2002-10271 A (Matsushita Electric Industrial Co., Ltd.), 11 January, 2002 (11.01.02), Full text; Figs. 1 to 23 & US 2001/0046263 A1 | 7-9,16-18 |
| Y | JP 10-248063 A (Toshiba Corp.), 14 September, 1998 (14.09.98), Claim 11; Par. No. [0003] (Family: none) | 9,18 |
| A | JP 2-54317 A (Asahi Optical Co., Ltd.), 23 February, 1990 (23.02.90), Page 2, upper left column, lines 6 to 14; Fig. 11 (Family: none) | 1-18 |
| A | JP 8-23514 A (Hitachi, Ltd.), 23 January, 1996 (23.01.96), Par. Nos. [0008], [0009], [0014] & US 5880786 A & DE 19521973 A1 | 1-18 |
| A | JP 11-68881 A (Sony Corp.), 09 March, 1999 (09.03.99), Full text; Figs. 1 to 6 (Family: none) | 1-18 |
| A | JP 11-75200 A (Hitachi, Ltd.), 16 March, 1999 (16.03.99), Par. Nos. [0018] to [0020] (Family: none) | 1-18 |
| A | JP 11-239352 A (Matsushita Electric Industrial Co., Ltd.), 31 August, 1999 (31.08.99), Par. No. [0051] & US 6353683 B1 | 1-18 |
| A | JP 11-252549 A (Toshiba Corp.), 17 September, 1999 (17.09.99), Par. No. [0072] (Family: none) | 1-18 |

Form PCT/ISA/210 (continuation of second sheet) (January 2004)

32

**EP 1 615 438 A1**

**INTERNATIONAL SEARCH REPORT**

| International application No. |
|---|
| PCT/JP2004/005394 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-332093 A  (Alcatel),<br>30 November, 1999 (30.11.99),<br>Par. No. [0002]<br>& EP 935399 A1          & FR 2774487 B1<br>& US 6366072 B2 | 1-18 |
| A | JP 2000-299840 A  (NEC Corp.),<br>24 October, 2000 (24.10.00),<br>Full text; Figs. 1 to 10<br>& US 6751405 B1 | 1-18 |
| A | JP 2001-45491 A  (Hitachi, Ltd.),<br>16 February, 2001 (16.02.01),<br>Full text; Figs. 1 to 11<br>(Family: none) | 1-18 |
| A | JP 2001-197149 A  (Mitsubishi Electric Corp.),<br>19 July, 2001 (19.07.01),<br>Full text; Figs. 1 to 6<br>(Family: none) | 1-18 |
| A | JP 2003-78770 A  (Canon Inc.),<br>14 March, 2003 (14.03.03),<br>Full text; Figs. 1 to 37<br>(Family: none) | 1-18 |
| A | Wai Lee et al., A 1V DSP for Wireless Communications, 1997 IEEE International Solid-State Circuits Conference, 1997. Digest of Technical Papers. 44th ISSCC., 06 February, 1997 (06.02.97), pages 92 to 93 | 1-18 |
| A | Edited by Takayasu SAKURAI et al., "Teisho'hi Denryoku, Kosoku LSI Gijutsu Low-power High-Speed LSI Circuits & Technology", Riaraizu Sha, 31 January, 1998 (31.01.98), pages 397 to 406 | 1-18 |

Form PCT/ISA/210 (continuation of second sheet) (January 2004)

33